# EUROPEAN PATENT SPECIFICATION

(11) **EP 2 746 143 B1**
(45) Date of publication and mention of the grant of the patent: **28.10.2015**
(21) Application number: 13198011.2
(22) Date of filing: 18.12.2013
(51) Int. Cl.: B62M 1/10, B62M 9/08

(54) **Transmission wheel series with periodically varied speed ratio and having reciprocally displacing auxiliary pulley for storing/releasing kinetic energy**
Übertragungsradreihe mit regelmäßig variiertem Geschwindigkeitsverhältnis und mit gegenseitigem Verdrängungshilfsriemen zum Speichern/Freisetzen von kinetischer Energie
Série de roues à transmission à rapport de vitesse périodiquement varié et ayant une poulie auxiliaire à déplacement réciproque permettant de stocker/libérer l'énergie cinétique

(30) Priority: 18.12.2012 US 201213717995
(43) Date of publication of application: 25.06.2014
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 2 505 482
- WO-A1-2006/114539
- CN-Y- 2 670 225
- DE-A1- 2 752 964
- DE-A1-102005 016 500
- GB-A- 449 504
- GB-A- 2 280 153

## Description

### BACKGROUND OF THE INVENTION

### (a) Field of the Invention

The present invention is to utilize an active pulley driven by a power source having unidirectional rotating output feature, or to install a unidirectional transmission device installed between the active pulley and a machine body or between an active wheel shaft combined with the active pulley and the machine body, so when a transmission belt is tightened while the active pulley driving a passive pulley in periodically varied speed ratios, meanwhile an auxiliary pulley (312) of an auxiliary pulley assembly for storing/releasing kinetic energy (700) is linked for storing energy to form a prestressed force, when the force applied by the active pulley to the passive pulley through the transmission belt is zero or relatively smaller, the auxiliary pulley (312) is enabled to release energy for recovering so as to apply force to the transmission belt, because the transmission belt is coupled to the active pulley and/or one end of the active wheel shaft combined with the active pulley is restrained by the unidirectional transmission device, the transmission belt is enabled to link the passive pulley to operate in the original revolving direction for feeding back the kinetic energy.

### (b) Description of the Prior Art

A conventional transmission pulley set composed of an active chain wheel, a passive chain wheel and a transmission chain, or a transmission pulley set composed of an active tooth-shaped wheel, a passive tooth-shaped wheel, a tooth-shaped transmission belt or a tooth-shaped transmission chain both have features as followings: 1) a non-sliding synchronous transmission feature is formed between the active chain wheel and the passive chain wheel and the transmission chain, or between the active tooth-shaped wheel and the passive tooth-shaped wheel and the tooth-shaped transmission belt or the tooth-shaped transmission chain; (2) if the length of the transmission chain or the tooth-shaped transmission belt or the tooth-shaped transmission chain is changed during the operation or during switching the speed ratio, a prestressed auxiliary idle wheel is often installed for randomly adjusting the tightness of the transmission chain, the tooth-shaped transmission belt or the tooth-shaped transmission chain, however, the tightness of transmission chain would be periodically varied during the operation, so the prestressed mechanism of the auxiliary idle wheel for storing/releasing kinetic energy is reciprocally displaced for storing energy and releasing energy, wherein one disadvantage of the prior art is that the increased load generated at the active side while the transmission chain pressing the auxiliary idle wheel cannot be fed back as a kinetic driving energy.

DE102005016500 (D1), which is considered to be the closest prior art, describes a transmission wheel series including an active circular pulley and a passive circular pulley connected to each other with an endless transmission member which also engages a reciprocally displacing auxiliary pulley for storing/releasing kinetic energy, wherein when the endless transmission member is tightened as the active pulley drives the passive pulley, the auxiliary pulley of an auxiliary pulley assembly for storing/releasing kinetic energy develops a pre-stressed force and when the force applied by the active pulley to the passive pulley through the endless transmission member is zero or relatively smaller, the auxiliary pulley is enabled to release energy so as to apply force to the endless transmission member to operate it for feeding back the kinetic energy to the transmission wheel series, the auxiliary pulley assembly comprising a reciprocally displacing auxiliary pulley for storing/releasing kinetic energy provided with a non-releasing synchronous transmission relation between endless transmission member and a transmission wheel thereby forming a non-sliding synchronous transmission wheel set.

The invention of EP2505482 is structure by using one or both of an active wheel and a passive wheel being composed of an eccentric transmission wheel and being combined with a synchronous transmission belt for forming an eccentric wheel transmission wheel series, so that in the reciprocal treadle performed by the human's feet, when the feet input forces at different angles from the treadle shafts of the treadles to an active wheel shaft combined on the active wheel through cranks, the active wheel forms different transmission speed ratios relative to the passive wheel according to the treadle angle.

### SUMMARY OF THE INVENTION

The present invention discloses a transmission wheel series according to claim 1 composed of an active pulley, a transmission belt and a passive pulley; the transmission wheel series comprising the arrangement that: (I) when the active pulley and the passive pulley are both formed as a noncircular synchronous transmission pulley, or (2) when one of the active pulley and the passive pulley are formed as a circular pulley and the other is formed as a noncircular synchronous transmission pulley, during each revolving period, the tightness of the transmission belt installed between the active pulley and the passive pulley is varied periodically, wherein the active pulley driven by a power source having unidirectional rotating output feature, or a unidirectional transmission device installed between the active pulley and a machine body or between an active wheel shaft combined with the active pulley and the machine body, when the transmission belt is tightened while the active pulley driving the passive pulley in periodically varied speed ratios, meanwhile an auxiliary pulley of an auxiliary pulley assembly for storing/releasing kinetic energy is linked for storing energy to from a prestressed force, when the force applied by the active pulley to the passive pulley through the transmission belt is zero or relatively smaller, the auxiliary pulley is enabled to release energy for recovering so as to apply force to the transmission belt, because the end of the transmission belt coupled to the active pulley is restrained by the unidirectional transmission device, the transmission belt is enabled to link the passive pulley to operate in the original revolving direction for feeding back the kinetic energy.

According to another aspect of the present invention, a transmission system comprises: an active pulley assembly having an active pulley, an active wheel shaft, and a uni-directional rotating transmission device between the active pulley and the active wheel shaft; a passive pulley assembly having a passive pulley and a passive wheel shaft; a transmission belt which is either a chain or toothed transmission belt so as not to slip on the active pulley and the passive pulley; and an auxiliary pulley assembly having an auxiliary pulley and a pre-stressed energy storing/releasing spring; wherein one of the passive pulley and active pulley has different transmission radius and dimensions and formed in circular, or bimodal elliptical, or eccentric circular, or eccentric elliptical or eccentric bi-modal elliptical shapes; and wherein when the force applied by the active pulley to the passive pulley through the transmission belt is zero or relatively smaller, the auxiliary pulley is enabled to release energy for recovering so as to apply force to the transmission belt, because the transmission belt is coupled to the active pulley and/or one end of the active wheel shaft combined with the active pulley is restrained by the unidirectional transmission device, the transmission belt is enabled to link the passive pulley to operate in the original revolving direction for feeding back the kinetic energy.

### BRIEF DESCRIPTION OF THE DRAWINGS

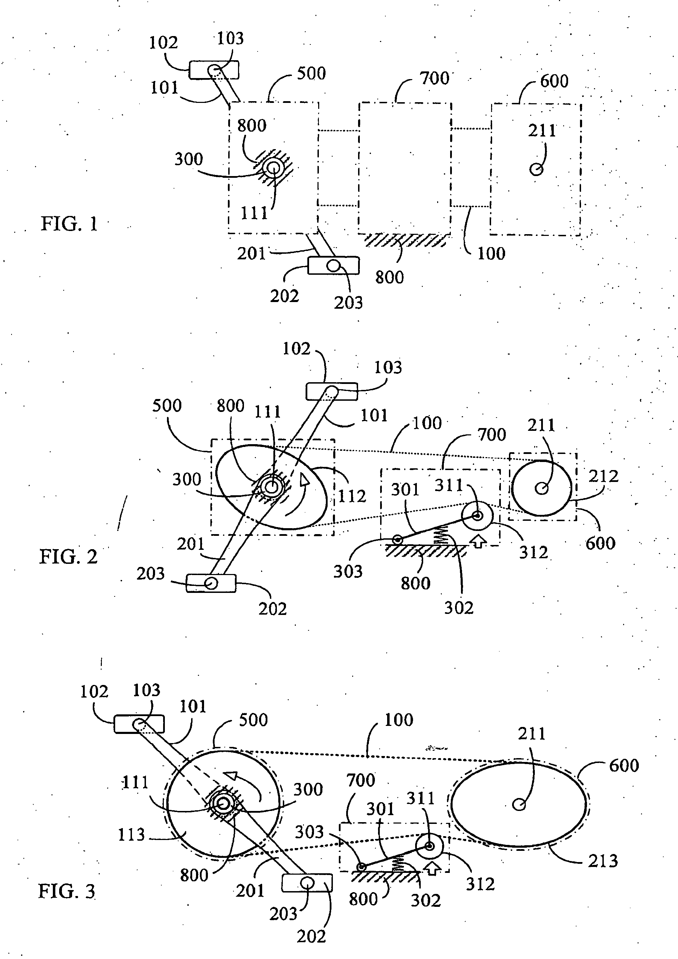

FIG. 1. is a schematic structural view of the present invention illustrating a unidirectional rotating transmission device (300) being installed between an active wheel shaft (111) and a machine body (800) for linking a passive pulley through a transmission belt (100) so as to drive the passive pulley in the original rotating direction while an auxiliary pulley (312) releasing energy for recovering.
FIG. 2 is a schematic view illustrating the embodiment of the present invention in which an elliptical pulley installed with the unidirectional rotating transmission device (300) between the wheel shaft and the machine body being adopted as the active pulley and a circular pulley being adopted as the passive pulley, and a transmission belt and an auxiliary pulley being installed.
FIG. 3 is a schematic view illustrating the embodiment of the present invention in which a circular pulley installed with the unidirectional rotating transmission device (300) between the wheel shaft and the machine body being adopted as the active pulley and an elliptical pulley being adopted as the passive pulley, and a transmission belt and an auxiliary pulley being installed.

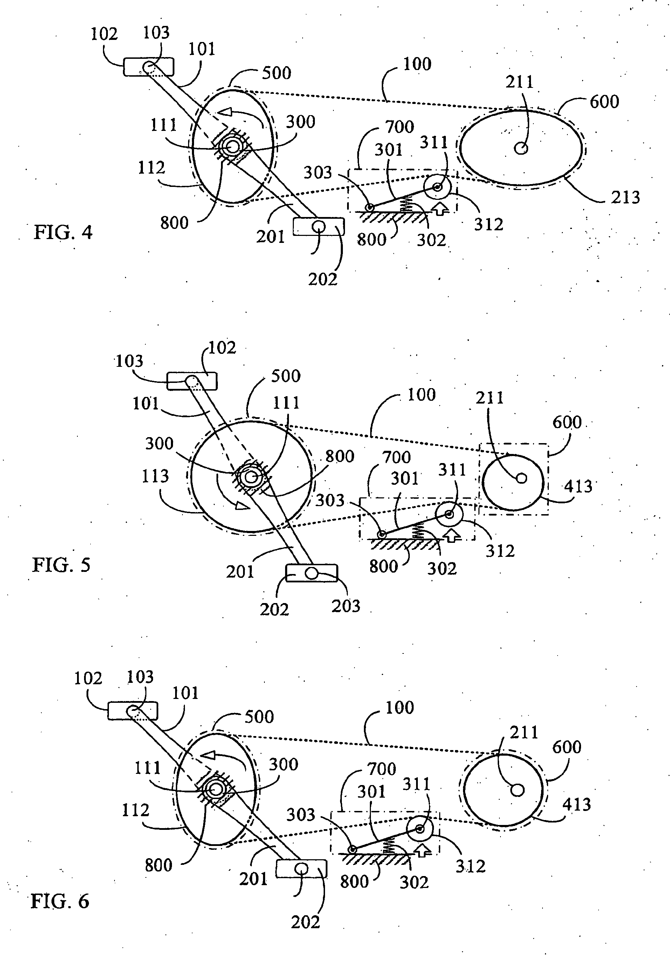

FIG. 4 is a schematic view illustrating the embodiment of the present invention in which the elliptical pulley installed with the unidirectional rotating transmission device (300) installed between the wheel shaft and the machine body being adopted as the active pulley and an elliptical pulley having 90 degree differentiation regarding to the active pulley being adopted as the passive pulley, and a transmission belt and an auxiliary pulley being installed.
FIG. 5 is a schematic view illustrating the embodiment of the present invention in which the circular pulley installed with the unidirectional rotating transmission device (300) between the wheel shaft and the machine body being adopted as the active pulley and an eccentric circular pulley being adopted as the passive pulley, and a transmission belt and an auxiliary pulley being installed.
FIG. 6 is a schematic view illustrating the embodiment of the present invention in which the bimodal elliptical active pulley (112) installed with the unidirectional rotating transmission device (300) between the active wheel shaft (111) and the machine body (800) being adopted as the active pulley and an eccentric circular pulley being adopted as the passive pulley, and a transmission belt and an auxiliary pulley being installed.

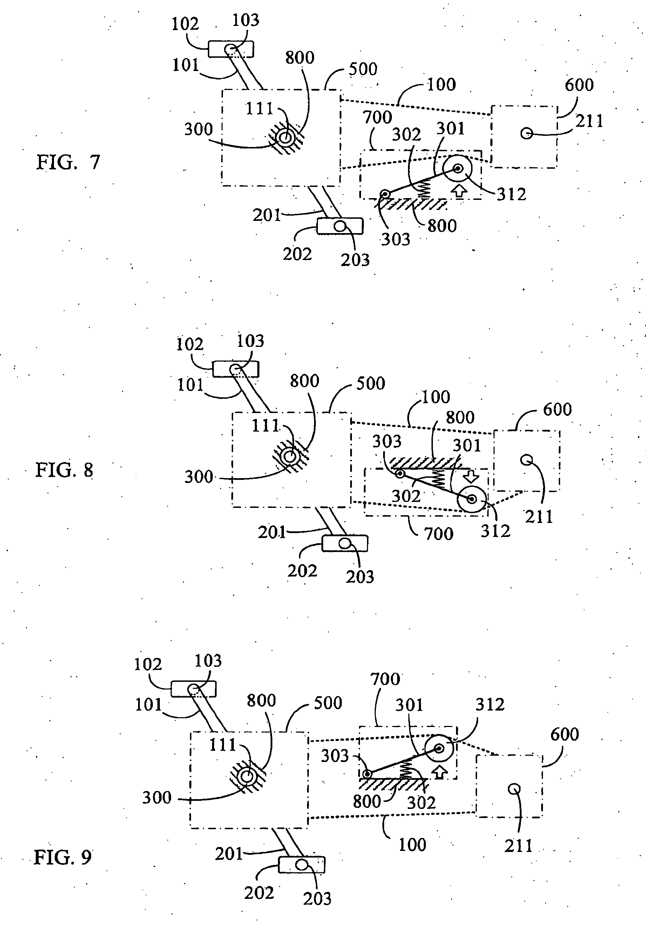

FIG. 7 is the first schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 8 is the second schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 9 is the third schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

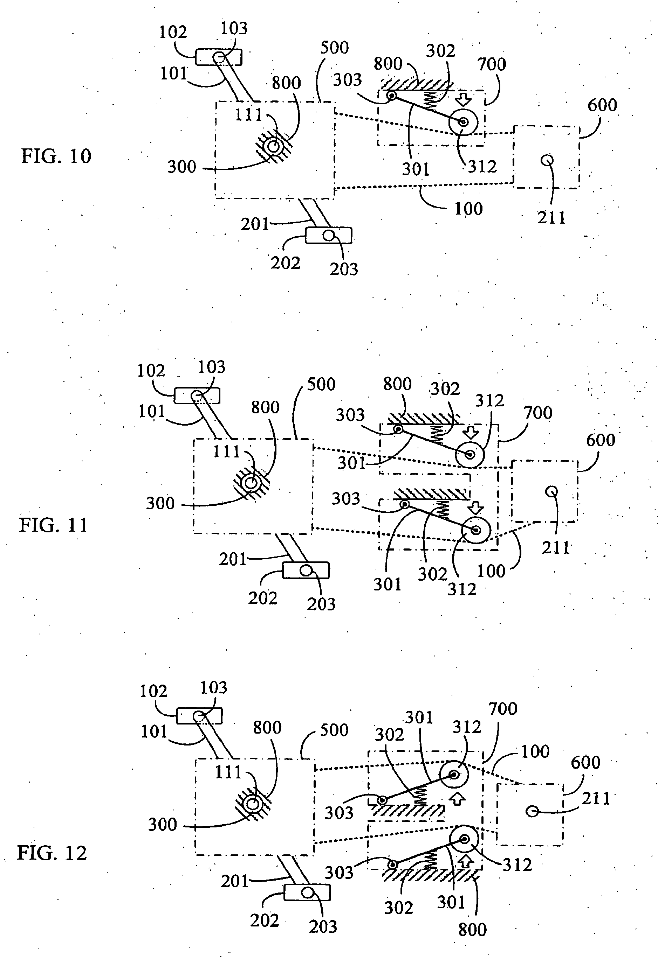

FIG. 10 is the fourth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 11 is the fifth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 12 is the sixth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

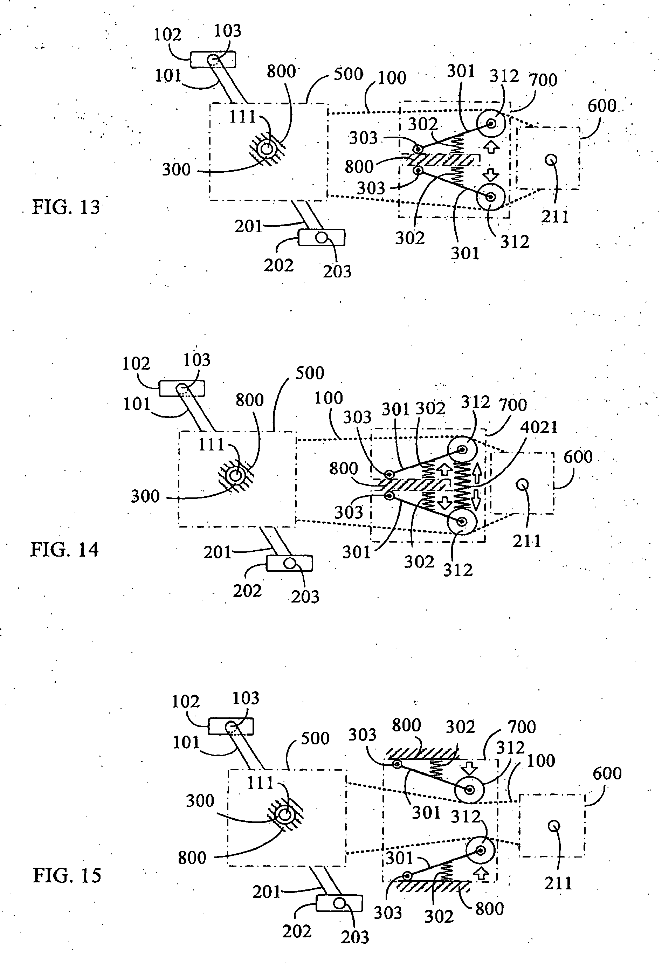

FIG. 13 is the seventh schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 14 is the eighth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 15 is the ninth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

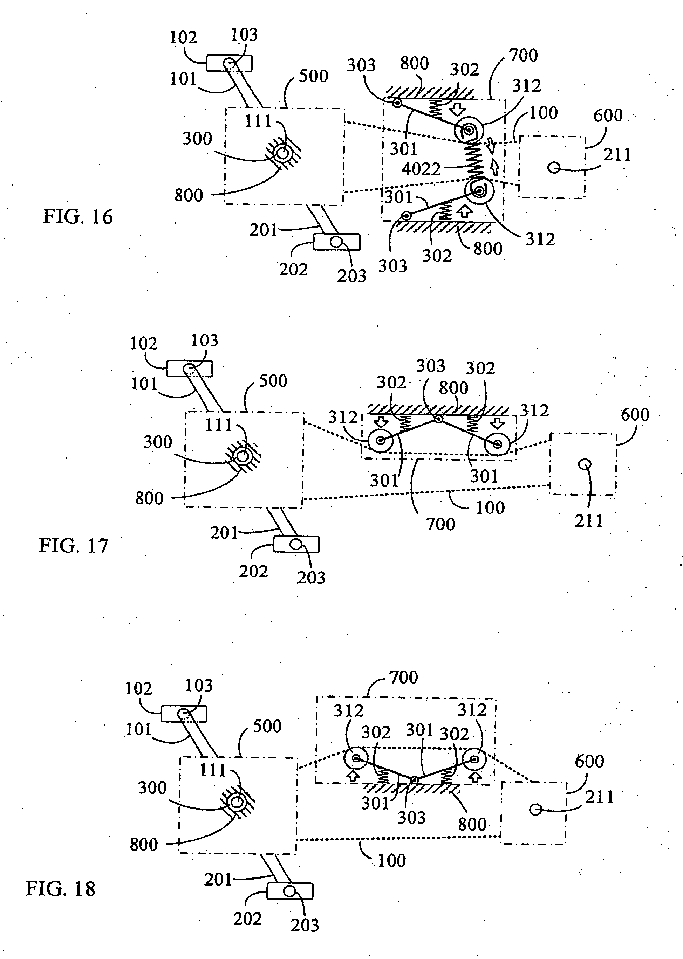

FIG. 16 is the tenth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 17 is the eleventh schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).
FIG. 18 is the twelfth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

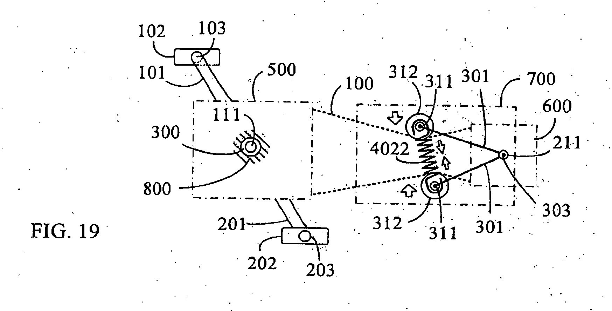

FIG. 19 is the thirteenth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

### DESCRIPTION OF MAIN COMPONENT SYMBOLS

100: Transmission belt
101: First crank
102: First treadle
103: First treadle shaft
111: Active wheel shaft
112: Bimodal elliptical active pulley
113: Circular active pulley
201: Second crank
202: Second treadle
203: Second treadle shaft
211: Passive wheel shaft
212: Circular passive pulley
213: Bimodal elliptical passive pulley
300: Unidirectional rotating transmission device
301: Auxiliary wheel press helve
302: Prestressed energy storing/releasing spring
303: Swing shaft of auxiliary wheel press helve
311: Auxiliary wheel shaft
312: Auxiliary pulley
4021: Bidirectional inward-towards-outward-expanding prestressed spring for storing/releasing energy
4022: Bidirectional outward-towards-inward-retracting prestressed spring for storing/releasing energy
413: Circular eccentric passive pulley
500: Active pulley assembly
600: Passive pulley assembly
700: Auxiliary pulley assembly for storing/releasing kinetic energy
800: Machine body

### DETAILED DESCRIPTION OF THE PREFERRED EMBODIMENTS

A conventional transmission pulley set composed of an active chain wheel, a passive chain wheel and a transmission chain, or a transmission pulley set composed of an active tooth-shaped wheel, a passive tooth-shaped wheel, a tooth-shaped transmission belt or a tooth-shaped transmission chain both have features as followings: 1) a non-sliding synchronous transmission feature is formed between the active chain wheel and the passive chain wheel and the transmission chain, or between the active tooth-shaped wheel and the passive tooth-shaped wheel and the tooth-shaped transmission belt or the tooth-shaped transmission chain; (2) if the length of the transmission chain or the tooth-shaped transmission belt or the tooth-shaped transmission chain is changed during the operation or during switching the speed ratio, a prestressed auxiliary idle wheel is often installed for randomly adjusting the tightness of the transmission chain, the tooth-shaped transmission belt or the tooth-shaped transmission chain, however, the tightness of transmission chain would be periodically varied during the operation, so the prestressed mechanism of the auxiliary idle wheel for storing/releasing kinetic energy is reciprocally displaced for storing energy and releasing energy, wherein one disadvantage of the prior art is that the increased load generated at the active side while the transmission chain pressing the auxiliary idle wheel cannot be fed back as a kinetic driving energy;

The present invention is to utilize an active pulley driven by a power source having unidirectional rotating output feature, or to install a unidirectional transmission device installed between the active pulley and a machine body or between an active wheel shaft combined with the active pulley and the machine body, so when a transmission belt is tightened while the active pulley driving a passive pulley in periodically varied speed ratios, meanwhile an auxiliary pulley (312) of an auxiliary pulley assembly for storing/releasing kinetic energy (700) is linked for storing energy to form a prestressed force, when the force applied by the active pulley to the passive pulley through the transmission belt is zero or relatively smaller, the auxiliary pulley (312) is enabled to release energy for recovering so as to apply force to the transmission belt, because the transmission belt is coupled to the active pulley and/or one end of the active wheel shaft combined with the active pulley is restrained by the unidirectional transmission device, the transmission belt is enabled to link the passive pulley to operate in the original revolving direction for feeding back the kinetic energy;

The present invention discloses a driving device composed of an active pulley, a transmission belt and a passive pulley; the transmission wheel series is characterized in: (1) when the active pulley and the passive pulley are both formed as a noncircular synchronous transmission pulley, or (2) when one or both of the active pulley and the passive pulley are formed as a circular pulley and the other is formed as a noncircular synchronous transmission pulley, during each revolving period, the tightness of the transmission belt installed between the active pulley and the passive pulley is varied periodically, wherein the active pulley driven by a power source having unidirectional rotating output feature, or a unidirectional transmission device installed between the active pulley and a machine body or between an active wheel shaft combined with the active pulley and the machine body, when the transmission belt is tightened while the active pulley driving the passive pulley in periodically varied speed ratios, meanwhile an auxiliary pulley of an auxiliary pulley assembly for storing/releasing kinetic energy is linked for storing energy to from a prestressed force, when the force applied by the active pulley to the passive pulley through the transmission belt is zero or relatively smaller, the auxiliary pulley is enabled to release energy for recovering so as to apply force to the transmission belt, because the end of the transmission belt coupled to the active pulley is restrained by the unidirectional transmission device, the transmission belt is enabled to link the passive pulley to operate in the original revolving direction for feeding back the kinetic energy;

Several embodiments for illustrating the transmission wheel series with periodically varied speed ratio and having reciprocally displacing auxiliary pulley for storing/releasing kinetic energy provided by the present invention are as followings:

FIG. 1 is a schematic structural view of the present invention illustrating a unidirectional rotating transmission device (300) being installed between an active wheel shaft (111) and a machine body (800) for linking a passive pulley through a transmission belt (100) so as to drive the passive pulley in the original rotating direction while an auxiliary pulley (312) releasing energy for recovering;

As shown in FIG. 1, mainly consists of:

The transmission wheel series with periodically varied speed ratio and having reciprocally displacing auxiliary pulley for storing/releasing kinetic energy is provided with a non-releasing synchronous transmission relation between the transmission belt and the transmission wheel thereby forming a non-sliding synchronous transmission wheel set, the mentioned wheel set can be composed of a chain-shaped transmission belt and a chain wheel, or a tooth-shaped pulley and a tooth-shaped transmission belt; wherein:
--active pulley assembly (500): composed of an active wheel shaft (111), an active pulley and a unidirectional rotating transmission device (300), the active pulley is combined with the active wheel shaft (111), the active wheel shaft (111) is served to input the rotational kinetic energy, the unidirectional rotating transmission device (300) is installed between the active wheel shaft (111) and the machine body, the active pulley is composed of various transmission pulleys having different transmission radius and dimensions and formed in circular, or bimodal elliptical, or eccentric circular, or eccentric elliptical or eccentric bimodal elliptical shapes;
--passive pulley assembly (600): composed of a passive wheel shaft (211) and a passive pulley, the passive pulley is served to revolve on the passive wheel shaft (211), the passive pulley is composed of various transmission pulleys having different transmission radius and dimensions and formed in circular, or bimodal elliptical, or eccentric circular, or eccentric elliptical or eccentric bimodal elliptical shapes;
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the passive pulley and the transmission belt (100) being ready to be synchronously combined and the location where the active pulley being released from the transmission belt (100); when the active pulley of the active pulley assembly (500) periodically drives the passive pulley of the passive pulley assembly (600), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the active pulley and the passive pulley to be linked in the original rotating direction so as to perform energy releasing drive; and with the disclosed structure, the speed ratio of driving the passive pulley is varied periodically.

The transmission wheel series with periodically varied speed ratio and having reciprocally displacing auxiliary pulley for storing/releasing kinetic energy of the present invention are applied extensively, and followings are several applications adopted in a treadle-drive bicycle or a fixed treadle-drive bicycle for exercising for further illustration.

FIG. 2 is a schematic view illustrating the embodiment of the present invention in which an elliptical pulley installed with the unidirectional rotating transmission device (300) between the wheel shaft and the machine body being adopted as the active pulley and a circular pulley being adopted as the passive pulley, and a transmission belt and an auxiliary pulley being installed;

As shown in FIG. 2, mainly consists of:-
-bimodal elliptical active pulley (112): composed of a bimodal elliptical active pulley (112) (or a bimodal elliptical-like active pulley), installed with the active wheel shaft (111), the unidirectional rotating transmission device (300) is installed between the active wheel shaft (111) and the machine body (800), one side of the active wheel shaft (111) of the bimodal elliptical active pulley (112) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a circular passive pulley (212) having a passive wheel shaft (211) through the transmission belt (100);
--circular passive pulley (212): composed of a circular passive pulley (212) (or a circular-like passive pulley), served to be linked by the transmission belt (100) driven by the bimodal elliptical active pulley (112);
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the circular passive pulley (212) and the transmission belt (100) being ready to be synchronously combined and the location where the bimodal elliptical active pulley (112) being released from the transmission belt (100); when the bimodal elliptical active pulley (112) periodically drives the circular passive pulley (212), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the bimodal elliptical active pulley (112) to be linked in the original rotating direction so as to perform energy releasing drive;

With the disclosed structure, when the first treadle (102) and the second treadle (202) are stepped for driving, the speed ratio between the bimodal elliptical active pulley (112) and the circular passive pulley (212) is varied periodically during each period of the stepping.

FIG. 3 is a schematic view illustrating the embodiment of the present invention in which a circular pulley installed with the unidirectional rotating transmission device (300) between the wheel shaft and the machine body being adopted as the active pulley and an elliptical pulley being adopted as the passive pulley, and a transmission belt and an auxiliary pulley being installed;

As shown in FIG. 3, mainly consists of:
--circular active pulley (113): composed of a circular active pulley (113) (or a circular-like active pulley), installed with the active wheel shaft (111), the unidirectional rotating transmission device (300) is installed between the active wheel shaft (111) and the machine body (800), one side of the active wheel shaft (111) of the circular active pulley (113) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a bimodal elliptical passive pulley (213) having a passive wheel shaft (211) through the transmission belt (100);
--bimodal elliptical passive pulley (213): composed of a bimodal elliptical passive pulley (213) (or a bimodal elliptical -like passive pulley), linked by the transmission belt (100) driven by the circular active pulley (113);
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the bimodal elliptical passive pulley (213) and the transmission belt (100) being ready to be synchronously combined and the location where the circular active pulley (113) being released from the transmission belt (100); when the circular active pulley (113) periodically drives the bimodal elliptical passive pulley (213), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the circular active pulley (113) and the bimodal elliptical passive pulley (213) to be linked in the original rotating direction so as to perform energy releasing drive;

With the disclosed structure, when the first treadle (102) and the second treadle (202) are stepped for driving, the speed ratio between the circular active pulley (113) and the bimodal elliptical passive pulley (213) is varied periodically during each period of the stepping.

FIG. 4 is a schematic view illustrating the embodiment of the present invention in which the elliptical pulley installed with the unidirectional rotating transmission device (300) installed between the wheel shaft and the machine body being adopted as the active pulley and an elliptical pulley having 90 degree differentiation regarding to the active pulley being adopted as the passive pulley, and a transmission belt and an auxiliary pulley being installed;

As shown in FIG. 4, mainly consists of:
--bimodal elliptical active pulley (112): composed of a bimodal elliptical active pulley (112) (or a bimodal elliptical-like active pulley), installed with the active wheel shaft (111), the unidirectional rotating transmission device (300) is installed between the active wheel shaft (111) and the machine body (800), one side of the active wheel shaft (111) of the bimodal elliptical active pulley (112) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a bimodal elliptical passive pulley (213) having a passive wheel shaft (211) through the transmission belt (100);
--bimodal elliptical passive pulley (213): composed of a bimodal elliptical passive pulley (213) (or a bimodal elliptical -like passive pulley), linked by the transmission belt (100) driven by the circular active pulley (113);
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the bimodal elliptical passive pulley (213) and the transmission belt (100) being ready to be synchronously combined and the location where the bimodal elliptical active pulley (112) being released from the transmission belt (100); when the bimodal elliptical active pulley (112) periodically drives the bimodal elliptical passive pulley (213), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the bimodal elliptical active pulley (112) and the bimodal elliptical passive pulley (213) to be linked in the original rotating direction so as to perform energy releasing drive;

With the disclosed structure, when the first treadle (102) and the second treadle (202) are stepped for driving, the speed ratio between the bimodal elliptical active pulley (112) and the bimodal elliptical passive pulley (213) is varied periodically during each period of the stepping.

FIG. 5 is a schematic view illustrating the embodiment of the present invention in which the circular pulley installed with the unidirectional rotating transmission device (300) between the wheel shaft and the machine body being adopted as the active pulley and an eccentric circular pulley being adopted as the passive pulley, and a transmission belt and an auxiliary pulley being installed;

As shown in FIG. 5, mainly consists of:
--circular active pulley (113): composed of a circular active pulley (113) (or a circular-like active pulley), installed with the active wheel shaft (111), the unidirectional rotating transmission device (300) is installed between the active wheel shaft (111) and the machine body (800), one side of the active wheel shaft (111) of the circular active pulley (113) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking an eccentric circular passive pulley (413) having a passive wheel shaft (211) through the transmission belt (100);
--eccentric circular passive pulley (413): composed of an eccentric circular passive pulley (413) (or an eccentric circular-like passive pulley), linked by the transmission belt (100) driven by the circular active pulley (113);
transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the eccentric circular passive pulley (413) and the transmission belt (100) being ready to be synchronously combined and the location where the circular active pulley (113) being released from the transmission belt (100); when the circular active pulley (113) periodically drives the eccentric circular passive pulley (413), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the circular active pulley (113) and the eccentric circular passive pulley (413) to be linked in the original rotating direction so as to perform energy releasing drive;

With the disclosed structure, when the first treadle (102) and the second treadle (202) are stepped for driving, the speed ratio between the circular active pulley (113) and the eccentric circular passive pulley (413) is varied periodically during each period of the stepping.

According to the transmission wheel series with periodically varied speed ratio and having reciprocally displacing auxiliary pulley for storing/releasing kinetic energy, the structure of the auxiliary pulley assembly for storing/releasing kinetic energy (700) is illustrated as followings:

FIG. 6 is a schematic view illustrating the embodiment of the present invention in which the bimodal elliptical active pulley (112) installed with the unidirectional rotating transmission device (300) between the active wheel shaft (111) and the machine body (800) being adopted as the active pulley and an eccentric circular pulley being adopted as the passive pulley, and a transmission belt and an auxiliary pulley being installed.

As shown in FIG. 6, mainly consists of:
--bimodal elliptical active pulley (112): composed of a bimodal elliptical active pulley (112) (or a bimodal elliptical-like active pulley) for being formed as the active pulley assembly (500), installed with the active wheel shaft (111), the unidirectional rotating transmission device (300) is installed between the active wheel shaft (111) and the machine body (800), one side of the active wheel shaft (111) of the bimodal elliptical active pulley (112) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a bimodal elliptical passive pulley (213) having a passive wheel shaft (211) through the transmission belt (100); the phase angle of the periodically varied speed ratio of the bimodal elliptical active pulley (112) and the bimodal elliptical passive pulley (213) being combined with the transmission belt (100) is relevant to the phase angle of the first crank (101) and the first treadle (102) and the second crank (201) and the second treadle (202), and enabled to be selected when the bimodal elliptical active pulley (112) and the bimodal elliptical passive pulley (213) are combined with the transmission belt (100);
--unidirectional rotating transmission device (300): composed of a structural member having the unidirectional rotating transmission function, such as a single way clutch, an over running clutch or a ratchet structure having the same function;
--eccentric circular passive pulley (413): composed of an eccentric circular passive pulley (413) (or an eccentric circular-like passive pulley) for being formed as the passive pulley assembly (600), linked by the transmission belt (100) driven by the bimodal elliptical active pulley (112);
--transmission belt (100): composed of a chain or a tooth-shaped transmission belt, a non-releasing synchronous transmission relation is formed between the transmission belt, the bimodal elliptical active pulley (112) and the eccentric circular passive pulley (413) thereby forming a non-sliding synchronous transmission wheel set, wherein the mechanical angle phase relation of the active pulley assembly (500) and the passive pulley assembly (600) relative to the transmission belt (100) is enabled to be selected with respect to the function; the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the eccentric circular passive pulley (413) and the transmission belt (100) being ready to be synchronously combined and the location where the bimodal elliptical active pulley (112) being released from the transmission belt (100), the auxiliary pulley (312) is composed of a synchronizing transmission pulley or a non-synchronizing transmission pulley; when the bimodal elliptical active pulley (112) periodically drives the eccentric circular passive pulley (413), the tightness of the transmission belt (100) is varied correspondingly, when the transmission belt (100) is gradually tightened, with the auxiliary wheel press helve having plate-shaped spring function and/or a prestressed spring for prestressing, the auxiliary pulley (312) is displaced for storing energy; when being loosened, with the auxiliary wheel press helve having plate-shaped spring function and/or the prestressed spring for displacing and releasing energy, and with the rotating direction restrain provided by the unidirectional rotating transmission device (300), the transmission belt (100) is enabled to pull the bimodal elliptical active pulley (112) and the eccentric circular passive pulley (413) to be linked in the original rotating direction so as to perform energy releasing drive;

With the disclosed structure, when the first treadle (102) and the second treadle (202) are stepped for driving, the speed ratio between the bimodal elliptical active pulley (112) and the eccentric circular passive pulley (413) is varied periodically during each period of the stepping. According to the transmission wheel series with periodically varied speed ratio and having reciprocally displacing auxiliary pulley for storing/releasing kinetic energy, the structure of the prestressing device of the auxiliary pulley assembly for storing/releasing energy (700) is illustrated by following examples:
(1) One end of the auxiliary wheel press helve (301) formed as a rigid and swingable support arm structure is swingably combined with the machine body (800), and an prestressed energy storing/releasing spring (302) is installed between the above two, the other end thereof is installed with an auxiliary wheel shaft (311) for being installed with the auxiliary pulley (312); or
(2) One end of the auxiliary wheel press helve having plate-shaped spring function is combined with the machine body (800) for replacing the auxiliary wheel press helve (301) and the prestressed energy storing/releasing spring (302), the other end of the auxiliary wheel press helve having plate-shaped spring function is installed with the auxiliary wheel shaft (311), the auxiliary pulley (312) is enabled to receive the prestressing force applied by the auxiliary wheel press helve having plate-shaped spring function.

FIG. 7 is the first schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 7, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312).

FIG. 8 is the second schematic view illustrating the embodiment of the present invention in which a kinetic energy storing/releasing state being formed between the active pulley assembly (500), the passive pulley assembly (600) and the auxiliary pulley assembly for storing/releasing kinetic energy (700);

As shown in FIG. 8, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the engaging portion of the transmission belt (100) being ready to enter the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312).

FIG. 9 is the third schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 9, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312).

FIG. 10 is the fourth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 10, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312).

FIG 11 is the fifth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 11, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312).

FIG. 12 is the sixth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 12, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312).

FIG. 13 is the seventh schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 13, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312).

FIG. 14 is the eighth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 14, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), engaged at the releasing portion of the transmission belt (100) releasing from the passive pulley assembly (600), with the function of the prestressed spring for storing/releasing energy (302), the mentioned auxiliary wheel press helve (301) is prestressed and expanded from inward towards outward, and the distal end of the auxiliary wheel press helve (301) swingably installed on the machine body (800) is installed with a second auxiliary pulley (312), engaged at the engaging portion of the transmission belt (100) being ready to be engaged with the passive pulley assembly (600), with the function of the prestressed spring for storing/releasing energy (302), the mentioned auxiliary wheel press helve (301) is prestressed and expanded from inward towards outward, and an bidirectional inward-towards-outward-expanding prestressed spring for storing/releasing energy (4021) is additionally installed between the two auxiliary pulleys (312) and the auxiliary wheel press helve (301).

FIG. 15 is a ninth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 15, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312).

FIG. 16 is a tenth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 16, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the machine body (800) is installed with a first auxiliary pulley (312), engaged at the releasing portion of the transmission belt (100) releasing from the passive pulley assembly (600), with the function of the prestressed spring for storing/releasing energy (302), the mentioned auxiliary wheel press helve (301) is prestressed and pressed from outward towards inward, and at the distal end of the other auxiliary wheel press helve (301) swingably installed on the machine body (800) is installed with a second auxiliary pulley (312), engaged at the engaging portion of the transmission belt (100) being ready to be engaged with the passive pulley assembly (600), with the function of the prestressed spring for storing/releasing energy (302), the mentioned auxiliary wheel press helve (301) is prestressed and pressed from outward towards inward, and an bidirectional outward-towards-inward-retracting prestressed spring for storing/releasing energy (4022) is additionally installed between the two auxiliary pulleys (312) and the auxiliary wheel press helve (301).

FIG. 17 is the eleventh schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 17, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the two auxiliary pulleys (312) are respectively installed at one end of the corresponding auxiliary wheel press helves (301), the other end of the individual auxiliary wheel press helves (301) is swingably combined with the machine body (800) through the swing shaft of auxiliary wheel press helve (303), prestressed springs for storing/releasing energy (302) are respectively installed between the two auxiliary wheel press helves (301) and the machine body (800), the two auxiliary pulleys (312) are engaged at the outer side of the releasing portion of the transmission belt (100) releasing from the passive pulley assembly (600), the two auxiliary pulleys (312) respectively press the transmission belt (100) inward thereby forming a concave bending angle, and with function of prestressed springs for storing/releasing energy (302), the mentioned auxiliary wheel press helves (301) are prestressed and pressed from outward towards inward.

FIG. 18 is the twelfth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 18, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the two auxiliary pulleys (312) are respectively installed at one end of the corresponding auxiliary wheel press helves (301), the other end of the corresponding auxiliary wheel press helves (301) are swingably combined with the machine body (800) through the swing shaft of auxiliary wheel press helve (303), prestressed springs for storing/releasing energy (302) are respectively installed between the two auxiliary wheel press helves (301) and the machine body (800), the two auxiliary pulleys (312) are engaged at the inner side of the releasing portion of the transmission belt (100) releasing from the passive pulley assembly (600), the two auxiliary pulleys (312) respectively expand outward for pressing the transmission belt (100) thereby forming a convex bending angle, and with the function of prestressed springs for storing/releasing energy (302), the mentioned auxiliary wheel press helves (301) are prestressed and expanded from inward towards outward.

FIG. 19 is the thirteenth schematic view illustrating the embodiment of the present invention in which a kinetic energy storing/releasing state being formed between the active pulley assembly (500), the passive pulley assembly (600) and the auxiliary pulley assembly for storing/releasing kinetic energy (700).

As shown in FIG. 19, the main configuration is that the rotation part of the active pulley assembly of the present invention is installed with the unidirectional rotating transmission device (300), the active side of the unidirectional rotating transmission device (300) is combined with the rotation part of the active pulley assembly (500), the passive side of the unidirectional rotating transmission device (300) is combined with the machine body (800), the distal end of the auxiliary wheel press helve (301) swingably installed on the passive wheel shaft (211) is installed with a first auxiliary pulley (312), engaged at the releasing portion of the transmission belt (100) releasing from the passive pulley assembly (600), with the function of the prestressed spring for storing/releasing energy (302), the mentioned auxiliary wheel press helve (301) is prestressed and pressed from outward towards inward, thereby the engaged transmission belt (100) is formed with a concave bending angle; and the distal end of the other auxiliary wheel press helve (301) swingably installed on the passive wheel shaft (211) is installed with a second auxiliary pulley (312), engaged at the engaging portion of the transmission belt (100) being ready to be engaged with the passive pulley assembly (600), with the function of the prestressed spring for storing/releasing energy (302), the mentioned auxiliary wheel press helve (301) is prestressed and pressed from outward towards inward, thereby the engaged transmission belt (100) is formed with a concave bending angle, and an bidirectional outward-towards-inward-retracting prestressed spring for storing/releasing energy (4022) is additionally installed between the two auxiliary pulleys (312) and the auxiliary wheel press helve (301).

## Claims

1. A transmission wheel series with periodically varied speed ratio and having reciprocally displacing auxiliary pulley (312) for storing/releasing kinetic energy, which has a power source driving an active pulley (112,113) having a unidirectional rotating output feature, wherein when a transmission belt (100) is tightened while the active pulley drives a passive pulley (212,213) in periodically varied speed ratios, the auxiliary pulley (312) of an auxiliary pulley assembly for storing/releasing kinetic energy (700) is arranged for storing energy to form a prestressed force and when the force applied by the active pulley to the passive pulley through the transmission belt is zero or relatively smaller, the auxiliary pulley (312) is enabled to release energy so as to apply force to the transmission belt, because the active pulley that the transmission belt (100) is coupled to, is restrained by the unidirectional transmission feature, the transmission belt is enabled to drive the passive pulley to operate in the original revolving direction for feeding back the kinetic energy, wherein
the transmission wheel series includes the following features; reciprocally displacing auxiliary pulley for storing/releasing kinetic energy is provided with a non-releasing synchronous transmission relation between the transmission belt (100) and the transmission wheel thereby forming a non-sliding synchronous transmission wheel set, the wheel set being composed of a chain-shaped transmission belt and a chain wheel, or a tooth-shaped pulley and a tooth-shaped transmission belt; and wherein:
--the active pulley assembly (500) is composed of an active wheel shaft (111) and the active pulley, the active pulley being combined with the active wheel shaft (111), the active wheel shaft (111) being arranged to input the rotational kinetic energy, the active pulley being composed of various transmission pulleys having different transmission radius and dimensions and formed in a circular shape if the passive pulley is not circular or else having a shape that is bimodal elliptical, or eccentric circular, or eccentric elliptical or eccentric bimodal elliptical;
the active pulley having the unidirectional rotating output feature comprising one or more than one of following arrangements, including 1) a unidirectional rotating transmission device (300) installed between the active pulley assembly (500) and the machine body; and 2) a unidirectional rotating transmission device (300) installed between the wheel shaft of the active pulley assembly (500) and the machine body;
--a passive pulley assembly (600): comprising a passive wheel shaft (211) and the passive pulley, the passive pulley being arranged to revolve on the passive wheel shaft (211), the passive pulley being composed of various transmission pulleys having different transmission radius and dimensions and formed in a circular shape if the active pulley is not circular or else having a shape that is bimodal elliptical, or eccentric circular, or eccentric elliptical or eccentric bimodal elliptical shapes;
--an auxiliary pulley assembly for storing/releasing kinetic energy (700) comprising the auxiliary pulley (312) arranged for providing the prestressing force applied by a prestressing device, is disposed at the portion of the transmission belt (100) defined between the location where the passive pulley and the transmission belt (100) are synchronously combined and the location where the active pulley is released from the transmission belt (100); such that when the active pulley of the active pulley assembly (500) periodically drives the passive pulley of the passive pulley assembly (600), the tightness of the transmission belt (100) is varied correspondingly and when the transmission belt (100) is gradually tightened, an auxiliary wheel press helve (301) having plate-shaped spring function and/or the auxiliary pulley (312) having a prestressed energy storing/releasing spring (302) installed between a rigid press helve and the machine body (800), the auxiliary wheel press helve (301) is displaced for storing energy, and when the transmission belt (100) is gradually loosened, the energy releasing displacement of the auxiliary wheel press helve (301) acts on the transmission belt (100) which is enabled to pull the active pulley and the passive pulley in the original rotating direction so as to perform energy releasing drive; and with the disclosed structure, the speed ratio of driving the passive pulley is varied periodically.

2. A transmission wheel series with periodically varied speed ratio and having reciprocally displacing auxiliary pulley for storing/releasing kinetic energy as claimed in claim 1, wherein including being adopted in a treadle-drive bicycle or a fixed treadle-drive bicycle for exercising, and an elliptical pulley adopted as the active pulley and a circular pulley being adopted as the passive pulley, and a transmission belt and an auxiliary pulley being installed, which consists of:
--bimodal elliptical active pulley (112): composed of a bimodal elliptical-like active pulley (112), installed with the active wheel shaft (111), one side of the active wheel shaft (111) of the bimodal elliptical active pulley (112) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a circular passive pulley (212) having a passive wheel shaft (211) through the transmission belt (100);
--circular passive pulley (212): composed of a circular-like passive pulley (212), served to be linked by the transmission belt (100) driven by the bimodal elliptical active pulley (112);
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the circular passive pulley (212) and the transmission belt (100) being ready to be synchronously combined and the location where the bimodal elliptical active pulley (112) being released from the transmission belt (100); when the bimodal elliptical active pulley (112) periodically drives the circular passive pulley (212), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the bimodal elliptical active pulley (112) to be linked in the original rotating direction so as to perform energy releasing drive;
wherein, when the first treadle (102) and the second treadle (202) are stepped for driving, the speed ratio between the bimodal elliptical active pulley (112) and the circular passive pulley (212) is varied periodically during each period of the stepping.

3. A transmission wheel series with periodically varied speed ratio and having reciprocally displacing auxiliary pulley for storing/releasing kinetic energy as claimed in claim 1, wherein including being adopted in a treadle-drive bicycle or a fixed treadle-drive bicycle for exercising, and a circular pulley being adopted as the active pulley and an elliptical pulley being adopted as the passive pulley, and a transmission belt and an auxiliary pulley being installed, which consists of:
--circular active pulley (113): composed of a circular-like active pulley (113), installed with the active wheel shaft (111), one side of the active wheel shaft (111) of the circular active pulley (113) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a bimodal elliptical passive pulley (213) having a passive wheel shaft (211) through the transmission belt (100);
--bimodal elliptical passive pulley (213): composed of a bimodal elliptical passive pulley (213) or a bimodal elliptical -like passive pulley, linked by the transmission belt (100) driven by the circular active pulley (113);
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the bimodal elliptical passive pulley (213) and the transmission belt (100) being ready to be synchronously combined and the location where the circular active pulley (113) being released from the transmission belt (100); when the circular active pulley (113) periodically drives the bimodal elliptical passive pulley (213), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the circular active pulley (113) and the bimodal elliptical passive pulley (213) to be linked in the original rotating direction so as to perform energy releasing drive;
wherein, when the first treadle (102) and the second treadle (202) are stepped for driving, the speed ratio between the circular active pulley (113) and the bimodal elliptical passive pulley (213) is varied periodically during each period of the stepping.

4. A transmission wheel series with periodically varied speed ratio and having reciprocally displacing auxiliary pulley for storing/releasing kinetic energy as claimed in claim 1, wherein including being adopted in a treadle-drive bicycle or a fixed treadle-drive bicycle for exercising, and the elliptical pulley being adopted as the active pulley and an elliptical pulley having 90 degree differentiation regarding to the active pulley being adopted as the passive pulley, and a transmission belt and an auxiliary pulley being installed, which consists of:
--bimodal elliptical active pulley (112): composed of a bimodal elliptical-like active pulley (112), installed with the active wheel shaft (111), one side of the active wheel shaft (111) of the bimodal elliptical active pulley (112) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a bimodal elliptical passive pulley (213) having a passive wheel shaft (211) through the transmission belt (100);
--bimodal elliptical passive pulley (213): composed of a bimodal elliptical-like passive pulley (213), linked by the transmission belt (100) driven by the circular active pulley (113);
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the bimodal elliptical passive pulley (213) and the transmission belt (100) being ready to be synchronously combined and the location where the bimodal elliptical active pulley (112) being released from the transmission belt (100); when the bimodal elliptical active pulley (112) periodically drives the bimodal elliptical passive pulley (213), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the bimodal elliptical active pulley (112) and the bimodal elliptical passive pulley (213) to be linked in the original rotating direction so as to perform energy releasing drive;
wherein, when the first treadle (102) and the second treadle (202) are stepped for driving, the speed ratio between the bimodal elliptical active pulley (112) and the bimodal elliptical passive pulley (213) is varied periodically during each period of the stepping.

5. A transmission wheel series with periodically varied speed ratio and having reciprocally displacing auxiliary pulley for storing/releasing kinetic energy as claimed in claim 1, wherein including being adopted in a treadle-drive bicycle or a fixed treadle-drive bicycle for exercising, and the circular pulley being adopted as the active pulley and an eccentric circular pulley being adopted as the passive pulley, and a transmission belt and an auxiliary pulley being installed, which consists of:
--circular active pulley (113): composed of a circular-like active pulley (113), installed with the active wheel shaft (111), the unidirectional rotating transmission device (300) is installed between the active wheel shaft (111) and the machine body (800), one side of the active wheel shaft (111) of the circular active pulley (113) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking an eccentric circular passive pulley (413) having a passive wheel shaft (211) through the transmission belt (100);
--eccentric circular passive pulley (413): composed of an eccentric circular-like passive pulley (413), linked by the transmission belt (100) driven by the circular active pulley (113);
--transmission belt (100): composed of a chain or a tooth-shaped transmission belt, a non-releasing synchronous transmission relation is formed between the transmission belt and the transmission wheel, thereby structuring a non-sliding synchronous transmission wheel set, the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the eccentric circular passive pulley (413) and the transmission belt (100) being ready to be synchronously combined and the location where the circular active pulley (113) being released from the transmission belt (100); when the circular active pulley (113) periodically drives the eccentric circular passive pulley (413), the tightness of the transmission belt (100) is varied correspondingly, when the transmission belt (100) is gradually tightened, an auxiliary wheel press helve (301) having plate-shaped spring function and/or the auxiliary pulley (312) having a prestressed energy storing/releasing spring (302) and installed between the rigid press helve and the machine body (800) is displaced for storing energy, when the transmission belt (100) is gradually loosened, with the energy releasing displacement by the auxiliary wheel press helve (301) having plate-shaped spring function and/or the prestressed energy storing/releasing spring (302), and with the rotating direction restrain provided by the unidirectional rotating transmission device (300), the transmission belt (100) is enabled to pull the circular active pulley (113) and the eccentric circular passive pulley (413) to be linked in the original rotating direction so as to perform energy releasing drive;
wherein, when the first treadle (102) and the second treadle (202) are stepped for driving, the speed ratio between the circular active pulley (113) and the eccentric circular passive pulley (413) is varied periodically during each period of the stepping.

6. A transmission wheel series with periodically varied speed ratio and having reciprocally displacing auxiliary pulley for storing/releasing kinetic energy as claimed in claim 1, wherein including being adopted in a treadle-drive bicycle or a fixed treadle-drive bicycle for exercising, and the bimodal elliptical active pulley (112) being adopted as the active pulley and an eccentric circular pulley being adopted as the passive pulley, which consists of:
--bimodal elliptical active pulley (112): composed of a bimodal elliptical-like active pulley (112) for being formed as the active pulley assembly (500), installed with the active wheel shaft (111), , one side of the active wheel shaft (111) of the bimodal elliptical active pulley (112) is driven by a first crank (101) linked by a first treadle (102) revolving on a first treadle shaft (103) for performing the revolving driving, the other side of the active wheel shaft (111) is driven by a second crank (201) linked by a second treadle (202) revolving on a second treadle shaft (203) for performing the revolving driving, thereby linking a bimodal elliptical passive pulley (213) having a passive wheel shaft (211) through the transmission belt (100); the phase angle of the periodically varied speed ratio of the bimodal elliptical active pulley (112) and the bimodal elliptical passive pulley (213) being combined with the transmission belt (100) is relevant to the phase angle of the first crank (101) and the first treadle (102) and the second crank (201) and the second treadle (202), and enabled to be selected when the bimodal elliptical active pulley (112) and the bimodal elliptical passive pulley (213) are combined with the transmission belt (100);
--unidirectional rotating transmission device (300): composed of a structural member having the unidirectional rotating transmission function, such as a single way clutch, an over running clutch or a ratchet structure having the same function;
--eccentric circular passive pulley (413): composed of an eccentric circular-like passive pulley (413) for being formed as the passive pulley assembly (600), linked by the transmission belt (100) driven by the bimodal elliptical active pulley (112);
--transmission belt (100): composed of a chain or a tooth-shaped transmission belt, a non-releasing synchronous transmission relation is formed between the transmission belt, the bimodal elliptical active pulley (112) and the eccentric circular passive pulley (413) thereby forming a non-sliding synchronous transmission wheel set, wherein the mechanical angle phase relation of the active pulley assembly (500) and the passive pulley assembly (600) relative to the transmission belt (100) is enabled to be selected with respect to the function; the mentioned wheel set includes being composed of a chain-shaped transmission belt and a chain wheel, or a tooth-shaped pulley and a tooth-shaped transmission belt;
--auxiliary pulley assembly for storing/releasing kinetic energy (700): installed with an auxiliary pulley (312), the mentioned auxiliary pulley (312) served for bearing the prestressing force applied by a prestressing device is disposed at the portion of the transmission belt (100) defined between the location where the eccentric circular passive pulley (413) and the transmission belt (100) being ready to be synchronously combined and the location where the bimodal elliptical active pulley (112) being released from the transmission belt (100), the auxiliary pulley (312) is composed of a synchronizing transmission pulley or a non-synchronizing transmission pulley; when the bimodal elliptical active pulley (112) periodically drives the eccentric circular passive pulley (413), the tightness of the transmission belt (100) is varied correspondingly, when the transmission belt (100) is gradually tightened, with the auxiliary wheel press helve having plate-shaped spring function and/or a prestressed spring for prestressing, the auxiliary pulley (312) is displaced for storing energy; when being loosened, with the auxiliary wheel press helve having plate-shaped spring function and/or the prestressed spring for displacing and releasing energy, and with the rotating direction restrain provided by the unidirectional rotating transmission device (300), the transmission belt (100) is enabled to pull the bimodal elliptical active pulley (112) and the eccentric circular passive pulley (413) to be linked in the original rotating direction so as to perform energy releasing drive;
with the disclosed structure, when the first treadle (102) and the second treadle (202) are stepped for driving, the speed ratio between the bimodal elliptical active pulley (112) and the eccentric circular passive pulley (413) is varied periodically during each period of the stepping.

7. A transmission wheel series with periodically varied speed ratio and having reciprocally displacing auxiliary pulley for storing/releasing kinetic energy as claimed in any of claims 1∼6, wherein the structure of the prestressing device of the auxiliary pulley assembly for storing/releasing energy (700) are as follow:
1) one end of the auxiliary wheel press helve (301) formed as a rigid and swingable support arm structure is swingably combined with the machine body (800), and an prestressed energy storing/releasing spring (302) is installed between the above two, the other end thereof is installed with an auxiliary wheel shaft (311) for being installed with the auxiliary pulley (312); or
2) one end of the auxiliary wheel press helve having plate-shaped spring function is combined with the machine body (800) for replacing the auxiliary wheel press helve (301) and the prestressed energy storing/releasing spring (302), the other end of the auxiliary wheel press helve having plate-shaped spring function is installed with the auxiliary wheel shaft (311), the auxiliary pulley (312) is enabled to receive the prestressing force applied by the auxiliary wheel press helve having plate-shaped spring function.

8. A transmission wheel series with periodically varied speed ratio and having reciprocally displacing auxiliary pulley for storing/releasing kinetic energy as claimed in any of claims 1∼7, wherein the constitution means of the auxiliary pulley assembly for storing/releasing kinetic energy (700) includes:
-- the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), the engaging portion of the transmission belt (100) being ready to enter the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to expand the prestressing force outwardly from the interior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), engaged at the releasing portion of the transmission belt (100) releasing from the passive pulley assembly (600), with the function of the prestressed spring for storing/releasing energy (302), the mentioned auxiliary wheel press helve (301) is prestressed and expanded from inward towards outward, and the distal end of the auxiliary wheel press helve (301) swingably installed on the machine body (800) is installed with a second auxiliary pulley (312), engaged at the engaging portion of the transmission belt (100) being ready to be engaged with the passive pulley assembly (600), with the function of the prestressed spring for storing/releasing energy (302), the mentioned auxiliary wheel press helve (301) is prestressed and expanded from inward towards outward, and an bidirectional inward-towards-outward-expanding prestressed spring for storing/releasing energy (4021) is additionally installed between the two auxiliary pulleys (312) and the auxiliary wheel press helve (301); or
-- the distal end of the auxiliary wheel press helve (301) swingably installed on the machine body (800) is installed with a first auxiliary pulley (312), the releasing portion of the transmission belt (100) releasing from the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312), and the engaging portion of the transmission belt (100) being ready to enter the passive pulley assembly (600) is installed with the auxiliary wheel press helve (301) capable of swinging along the machine body (800) to inwardly put prestressing force from the exterior in normal state, the prestressed energy storing/releasing spring (302) and the auxiliary pulley (312); or
-- the distal end of the auxiliary wheel press helve (301) swingably installed on the machine body (800) is installed with a first auxiliary pulley (312), engaged at the releasing portion of the transmission belt (100) releasing from the passive pulley assembly (600), with the function of the prestressed spring for storing/releasing energy (302), the mentioned auxiliary wheel press helve (301) is prestressed and pressed from outward towards inward, and at the distal end of the other auxiliary wheel press helve (301) swingably installed on the machine body (800) is installed with a second auxiliary pulley (312), engaged at the engaging portion of the transmission belt (100) being ready to be engaged with the passive pulley assembly (600), with the function of the prestressed spring for storing/releasing energy (302), the mentioned auxiliary wheel press helve (301) is prestressed and pressed from outward towards inward, and an bidirectional outward-towards-inward-retracting prestressed spring for storing/releasing energy (4022) is additionally installed between the two auxiliary pulleys (312) and the auxiliary wheel press helve (301); or
-- the two auxiliary pulleys (312) are respectively installed at one end of the corresponding auxiliary wheel press helves (301), the other end of the individual auxiliary wheel press helves (301) is swingably combined with the machine body (800) through the swing shaft of auxiliary wheel press helve (303), prestressed springs for storing/releasing energy (302) are respectively installed between the two auxiliary wheel press helves (301) and the machine body (800), the two auxiliary pulleys (312) are engaged at the outer side of the releasing portion of the transmission belt (100) releasing from the passive pulley assembly (600), the two auxiliary pulleys (312) respectively press the transmission belt (100) inward thereby forming a concave bending angle, and with function of prestressed springs for storing/releasing energy (302), the mentioned auxiliary wheel press helves (301) are prestressed and pressed from outward towards inward; or
-- the two auxiliary pulleys (312) are respectively installed at one end of the corresponding auxiliary wheel press helves (301), the other end of the corresponding auxiliary wheel press helves (301) are swingably combined with the machine body (800) through the swing shaft of auxiliary wheel press helve (303), prestressed springs for storing/releasing energy (302) are respectively installed between the two auxiliary wheel press helves (301) and the machine body (800), the two auxiliary pulleys (312) are engaged at the inner side of the releasing portion of the transmission belt (100) releasing from the passive pulley assembly (600), the two auxiliary pulleys (312) respectively expand outward for pressing the transmission belt (100) thereby forming a convex bending angle, and with the function of prestressed springs for storing/releasing energy (302), the mentioned auxiliary wheel press helves (301) are prestressed and expanded from inward towards outward; or
-- the distal end of the auxiliary wheel press helve (301) swingably installed on the passive wheel shaft (211) is installed with a first auxiliary pulley (312), engaged at the releasing portion of the transmission belt (100) releasing from the passive pulley assembly (600), with the function of the prestressed spring for storing/releasing energy (302), the mentioned auxiliary wheel press helve (301) is prestressed and pressed from outward towards inward, thereby the engaged transmission belt (100) is formed with a concave bending angle; and the distal end of the other auxiliary wheel press helve (301) swingably installed on the passive wheel shaft (211) is installed with a second auxiliary pulley (312), engaged at the engaging portion of the transmission belt (100) being ready to be engaged with the passive pulley assembly (600), with the function of the prestressed spring for storing/releasing energy (302), the mentioned auxiliary wheel press helve (301) is prestressed and pressed from outward towards inward, thereby the engaged transmission belt (100) is formed with a concave bending angle, and an bidirectional outward-towards-inward-retracting prestressed spring for storing/releasing energy (4022) is additionally installed between the two auxiliary pulleys (312) and the auxiliary wheel press helve (301).

## Patentansprüche

1. Übertragungsradreihe mit regelmäßig variiertem Geschwindigkeitsverhältnis und mit gegenseitigem Verdrängungshilfsriemen (312) zum Speichern/Freisetzen von kinetischer Energie, mit einer Stromquelle, die einen aktiven Riemen (112, 113) antreibt, der eine einseitig gerichtete Rotationsausgabefunktion hat, wobei beim Festziehen eines Treibriemens (100), während der aktive Riemen einen passiven Riemen (212, 213) in regelmäßig variierten Geschwindigkeitsverhältnissen betreibt, der Hilfsriemen (312) einer Hilfsriemenbaugruppe zum Speichern/Freisetzen von kinetischer Energie (700) vorgesehen ist, um Energie zu speichern, um eine Vorspannkraft zu bilden, und wenn die Kraft, die der aktive Riemen über den Treibriemen auf den passiven Riemen ausübt, Null ist oder relativ kleiner ist, der Hilfsriemen (312) Energie freisetzen kann, um Kraft auf den Treibriemen auszuüben, weil der aktive Riemen, an den der Treibriemen (100) gekoppelt ist, durch die einseitig gerichtete Übertragungsvorrichtung beschränkt ist, wobei der Treibriemen den passiven Riemen so antreiben kann, dass er in die ursprüngliche Rotationsrichtung arbeitet, um die kinetische Energie zurückzuführen, wobei
die Übertragungsradreihe folgende Funktionen umfasst: der gegenseitige Verdrängungshilfsriemen zum Speichern/Freisetzen von kinetischer Energie verfügt über ein nicht-freisetzendes synchrones Transmissionsverhältnis zwischen dem Treibriemen (100) und dem Übertragungsrad, wodurch ein nicht-gleitendes synchrones Übertragungsradset entsteht, wobei das Radset besteht aus einem kettenförmigen Treibriemen und einem Kettenrad oder einem zahnförmigen Riemen und einem zahnförmigen Treibriemen;
und wobei:
-- die aktive Riemenbaugruppe (500) besteht aus einer aktiven Radwelle (111) und dem aktiven Riemen, wobei der aktive Riemen mit der aktiven Radwelle (111) kombiniert ist, wobei die aktive Radwelle (111) so angeordnet ist, dass sie die kinetische Rotationsenergie einspeist, und wobei der aktive Riemen aus mehreren Übertragungsriemen mit unterschiedlichen Übertragungsradii und Abmessungen besteht und kreisförmig ausgeführt sind, wenn der passive Riemen nicht kreisförmig ist oder eine andere Form hat, die bimodal elliptisch oder exzentrisch kreisförmig oder exzentrisch elliptisch oder exzentrisch bimodal elliptisch ist;
der aktive Riemen mit der einseitig gerichteten Rotationsausgabefunktion eine oder mehrere der folgenden Anordnungen umfasst, einschließlich 1) einer einseitig gerichteten Übertragungsvorrichtung (300), die zwischen der aktiven Riemenbaugruppe (500) und dem Maschinenkorpus installiert ist; und 2) einer einseitig gerichteten Übertragungsvorrichtung (300), die zwischen der Radwelle der aktiven Riemenbaugruppe (500) und dem Maschinenkorpus installiert ist;
-- eine passive Riemenbaugruppe (600): bestehend aus einer passiven Radwelle (211) und dem passiven Riemen, wobei der passive Riemen so angeordnet ist, dass er auf der passiven Radwelle (211) rotiert, wobei die passive Radwelle aus mehreren Treibriemen mit unterschiedlichen Übertragungsradii und Abmessungen besteht und kreisförmig ausgeführt sind, wenn der passive Riemen nicht kreisförmig ist oder eine andere Form hat, die bimodal elliptisch oder exzentrisch kreisförmig oder exzentrisch elliptisch oder exzentrisch bimodal elliptisch ist;
-- Hilfsriemenbaugruppe zum Speichern/Freisetzen von kinetischer Energie (700), bestehend aus dem Hilfsriemen (312), angeordnet für die Bereitstellung der Vorspannkraft, die durch eine Vorspannvorrichtung ausgeübt wird, ist in dem Teil des Treibriemens (100) angeordnet, der zwischen der Stelle, an der der passive Riemen und der Treibriemen (100) synchron kombiniert sind, und der Stelle, an der der aktive Riemen aus dem Treibriemen (100) freigegeben wird, definiert ist; so dass, wenn der aktive Riemen der aktiven Riemenbaugruppe (500) regelmäßig den passiven Riemen der passiven Riemenbaugruppe (600) antreibt, die Festigkeit des Treibriemens (100) entsprechend variiert, und wenn der Treibriemen (100) stufenweise festgezogen wird, wird ein Hilfsradpressengriff (301) mit einer tellerförmigen Federfunktion und/oder der Hilfsriemen (312) mit vorgespannter Energie-Speicher-/-Freisetzungsfeder (302), der zwischen einem biegesteifen Pressengriff und dem Maschinenkorpus (800) installiert ist, verschoben, um Energie zu speichern, und wenn der Treibriemen (100) stufenweise gelöst wird, wirkt die energiefreisetzende Verschiebung des Hilfsradpressengriffs (301) auf den Treibriemen (100), der den aktiven Riemen und den passiven Riemen in die ursprüngliche Rotationsrichtung ziehen kann, um die energiefreisetzende Fahrt durchzuführen; und mit der offengelegten Struktur wird das Geschwindigkeitsverhältnis des Antriebs des passiven Riemens regelmäßig variiert.

2. Übertragungsradreihe mit regelmäßig variiertem Geschwindigkeitsverhältnis und mit gegenseitigem Verdrängungshilfsriemen zum Speichern/Freisetzen von kinetischer Energie gemäß Anspruch 1, wobei enthalten ist, dass diese in einem Fahrrad mit Pedalantrieb oder einem Fahrrad mit festem Pedalantrieb zum Sport übernommen wird, und dass ein elliptischer Riemen als aktiver Riemen und ein kreisförmiger Riemen als passiver Riemen übernommen wird, und ein Treibriemen und ein Hilfsriemen installiert sind, bestehend aus:
-- einem bimodal elliptischen aktiven Riemen (112): bestehend aus einem bimodal ellipsenartigen aktiven Riemen (112), der mit der aktiven Radwelle (111) installiert ist, wobei eine Seite der aktiven Radwelle (111) des bimodal elliptischen aktiven Riemens (112) durch eine erste Kurbel (101) angetrieben wird, die durch eine erste Pedale (102) verbunden ist, die auf einer ersten Pedalwelle (103) rotiert, um die Drehfahrt auszuführen, und wobei die andere Seite der aktiven Radwelle (111) durch eine zweite Kurbel (201) angetrieben wird, die durch eine zweite Pedale (202) verbunden ist, die auf einer zweiten Pedalwelle (203) rotiert, um die Drehfahrt auszuführen, wodurch ein kreisförmiger passiver Riemen (212) mit einer passiven Radwelle (211) über den Treibriemen (100) verbunden wird;
-- einem kreisförmigen passiven Riemen (212): bestehend aus einem kreisähnlichen passiven Riemen (212), der durch den Treibriemen (100), der durch den bimodal elliptischen aktiven Riemen (112) angetrieben wird, verbunden werden soll;
-- Treibriemen (100): bestehend aus einem ketten- oder zahnförmigen Treibriemen, wobei zwischen dem Treibriemen und dem Übertragungsrad ein nicht-freisetzendes synchrones Übertragungsverhältnis gebildet wird, wodurch ein nichtgleitendes synchrones Übertragungsradset strukturiert wird, wobei dieses Radset unter anderem aus einem kettenförmigen Treibriemen und einem Kettenrad oder einem zahnförmigen Riemen und einem zahnförmigen Treibriemen bestehen kann;
-- Hilfsriemenbaugruppe zum Speichern/Freisetzen von kinetischer Energie (700): installiert mit einem Hilfsriemen (312), wobei dieser Hilfsriemen (312) dazu dient, die Vorspannkraft aufzunehmen, die durch eine Vorspannvorrichtung eingebracht wird, die in dem Teil des Treibriemens (100) angeordnet ist, der zwischen der Stelle, an der der kreisförmige passive Riemen (212) und der Treibriemen (100) bereit sind, synchron kombiniert zu werden, und der Stelle, an der der bimodal elliptische aktive Riemen (112), der aus dem Treibriemen (100) freigegeben wird, definiert ist; wenn der bimodal elliptische aktive Riemen (112) regelmäßig den kreisförmigen passiven Riemen (212) antreibt, variiert die Festigkeit des Treibriemens (100) entsprechend, und wenn der Treibriemen (100) stufenweise festgezogen wird, wird ein Hilfsradpressengriff (301) mit einer tellerförmigen Federfunktion und/oder der Hilfsriemen (312) mit einer vorgespannten Energie-Speicher-/-Freisetzungsfeder (302), der zwischen dem biegesteifen Pressengriff und dem Maschinenkorpus (800) installiert ist, verschoben, um Energie zu speichern, und wenn der Treibriemen (100) stufenweise gelöst wird, mit der energiefreisetzenden Verschiebung durch den Hilfsradpressengriff (301) mit einer tellerförmigen Federfunktion und/oder der vorgespannten Energie-Speicher-/-Freisetzungsfeder (302) und mit der Rotationsrichtungseinschränkung durch die einseitig gerichtete Rotationsübertragungsvorrichtung (300), kann der Treibriemen (100) den bimodal elliptischen aktiven Riemen (112), der in der ursprünglichen Rotationsrichtung verbunden werden soll, ziehen, so dass eine energiefreisetzende Fahrt durchgeführt werden kann;
wobei, wenn die erste Pedale (102) und die zweite Pedale (202) zum Fahren getreten werden, das Geschwindigkeitsverhältnis zwischen dem bimodal elliptischen aktiven Riemen (112) und dem kreisförmigen passiven Riemen (212) während jedes Tretzeitraumes regelmäßig variiert wird.

3. Übertragungsradreihe mit regelmäßig variiertem Geschwindigkeitsverhältnis und mit gegenseitigem Verdrängungshilfsriemen zum Speichern/Freisetzen von kinetischer Energie gemäß Anspruch 1, wobei enthalten ist, dass diese in einem Fahrrad mit Pedalantrieb oder einem Fahrrad mit festem Pedalantrieb zum Sport übernommen wird, und dass ein kreisförmiger Riemen als aktiver Riemen und ein elliptischer Riemen als passiver Riemen übernommen wird, und ein Treibriemen und ein Hilfsriemen installiert sind, bestehend aus:
-- einem kreisförmigen aktiven Riemen (113): bestehend aus einem kreisähnlichen aktiven Riemen (113), der mit der aktiven Radwelle (111) installiert ist, wobei eine Seite der aktiven Radwelle (111) des kreisförmigen aktiven Riemens (113) durch eine erste Kurbel (101) angetrieben wird, die durch eine erste Pedale (102) verbunden ist, die auf einer ersten Pedalwelle (103) rotiert, um die Drehfahrt auszuführen, und wobei die andere Seite der aktiven Radwelle (111) durch eine zweite Kurbel (201) angetrieben wird, die durch eine zweite Pedale (202) verbunden ist, die auf einer zweiten Pedalwelle (203) rotiert, um die Drehfahrt auszuführen, wodurch ein bimodal elliptischer passiver Riemen (213) mit einer passiven Radwelle (211) über den Treibriemen (100) verbunden wird;
-- einem kreisförmigen passiven Riemen (213): bestehend aus einem kreisähnlichen passiven Riemen (213), der durch den Treibriemen (100), der durch den bimodal elliptischen aktiven Riemen (113) angetrieben wird, verbunden werden soll;
-- Treibriemen (100): bestehend aus einem ketten- oder zahnförmigen Treibriemen, wobei zwischen dem Treibriemen und dem Übertragungsrad ein nicht-freisetzendes synchrones Übertragungsverhältnis gebildet wird, wodurch ein nichtgleitendes synchrones Übertragungsradset strukturiert wird, wobei dieses Radset unter anderem aus einem kettenförmigen Treibriemen und einem Kettenrad oder einem zahnförmigen Riemen und einem zahnförmigen Treibriemen bestehen kann;
-- Hilfsriemenbaugruppe zum Speichern/Freisetzen von kinetischer Energie (700): installiert mit einem Hilfsriemen (312), wobei dieser Hilfsriemen (312) dazu dient, die Vorspannkraft aufzunehmen, die durch eine Vorspannvorrichtung eingebracht wird, die in dem Teil des Treibriemens (100) angeordnet ist, der zwischen der Stelle, an der der bimodal elliptische passive Riemen (213) und der Treibriemen (100) bereit sind, synchron kombiniert zu werden, und der Stelle, an der der kreisförmige aktive Riemen (113), der aus dem Treibriemen (100) freigegeben wird, definiert ist; wenn der kreisförmige aktive Riemen (113) regelmäßig den bimodal elliptischen passiven Riemen (213) antreibt, variiert die Festigkeit des Treibriemens (100) entsprechend, und wenn der Treibriemen (100) stufenweise festgezogen wird, wird ein Hilfsradpressengriff (301) mit einer tellerförmigen Federfunktion und/oder der Hilfsriemen (312) mit einer vorgespannten Energie-Speicher-/-Freisetzungsfeder (302), der zwischen dem biegesteifen Pressengriff und dem Maschinenkorpus (800) installiert ist, verschoben, um Energie zu speichern, und wenn der Treibriemen (100) stufenweise gelöst wird, mit der energiefreisetzenden Verschiebung durch den Hilfsradpressengriff (301) mit einer tellerförmigen Federfunktion und/oder der vorgespannten Energie-Speicher-/-Freisetzungsfeder (302) und mit der Rotationsrichtungseinschränkung durch die einseitig gerichtete Rotationsübertragungsvorrichtung (300), kann der Treibriemen (100) den kreisförmigen aktiven Riemen (113) und den bimodal elliptischen passiven Riemen (213), der in der ursprünglichen Rotationsrichtung verbunden werden soll, ziehen, so dass eine energiefreisetzende Fahrt durchgeführt werden kann; wobei, wenn die erste Pedale (102) und die zweite Pedale (202) zum Fahren getreten werden, das Geschwindigkeitsverhältnis zwischen dem kreisförmigen aktiven Riemen (113) und dem bimodal elliptischen passiven Riemen (213) während jedes Tretzeitraumes regelmäßig variiert wird.

4. Übertragungsradreihe mit regelmäßig variiertem Geschwindigkeitsverhältnis und mit gegenseitigem Verdrängungshilfsriemen zum Speichern/Freisetzen von kinetischer Energie gemäß Anspruch 1, wobei enthalten ist, dass diese in einem Fahrrad mit Pedalantrieb oder einem Fahrrad mit festem Pedalantrieb zum Sport übernommen wird, und dass der elliptische Riemen als aktiver Riemen und ein elliptischer Riemen mit einer Abweichung um 90 Grad bezüglich des aktiven Riemens als passiver Riemen übernommen wird, und ein Treibriemen und ein Hilfsriemen installiert sind, bestehend aus:
-- einem bimodal elliptischen aktiven Riemen (112): bestehend aus einem bimodal ellipsenartigen aktiven Riemen (112), der mit der aktiven Radwelle (111) installiert ist, wobei eine Seite der aktiven Radwelle (111) des bimodal elliptischen aktiven Riemens (112) durch eine erste Kurbel (101) angetrieben wird, die durch eine erste Pedale (102) verbunden ist, die auf einer ersten Pedalwelle (103) rotiert, um die Drehfahrt auszuführen, und wobei die andere Seite der aktiven Radwelle (111) durch eine zweite Kurbel (201) angetrieben wird, die durch eine zweite Pedale (202) verbunden ist, die auf einer zweiten Pedalwelle (203) rotiert, um die Drehfahrt auszuführen, wodurch ein bimodal elliptischer passiver Riemen (213) mit einer passiven Radwelle (211) über den Treibriemen (100) verbunden wird;
-- einem bimodal elliptischen passiven Riemen (213): bestehend aus einem bimodal ellipsenartigen passiven Riemen (213), der über den Treibriemen (100) verbunden ist, der vom kreisförmigen aktiven Riemen (113) angetrieben wird;
-- Treibriemen (100): bestehend aus einem ketten- oder zahnförmigen Treibriemen, wobei zwischen dem Treibriemen und dem Übertragungsrad ein nicht-freisetzendes synchrones Übertragungsverhältnis gebildet wird, wodurch ein nichtgleitendes synchrones Übertragungsradset strukturiert wird, wobei dieses Radset unter anderem aus einem kettenförmigen Treibriemen und einem Kettenrad oder einem zahnförmigen Riemen und einem zahnförmigen Treibriemen bestehen kann;
-- Hilfsriemenbaugruppe zum Speichern/Freisetzen von kinetischer Energie (700): installiert mit einem Hilfsriemen (312), wobei dieser Hilfsriemen (312) dazu dient, die Vorspannkraft aufzunehmen, die durch eine Vorspannvorrichtung eingebracht wird, die in dem Teil des Treibriemens (100) angeordnet ist, der zwischen der Stelle, an der der bimodal elliptische passive Riemen (213) und der Treibriemen (100) bereit sind, synchron kombiniert zu werden, und der Stelle, an der der bimodal elliptische aktive Riemen (112), der aus dem Treibriemen (100) freigegeben wird, definiert ist; wenn der bimodal elliptische aktive Riemen (112) regelmäßig den bimodal elliptischen passiven Riemen (213) antreibt, variiert die Festigkeit des Treibriemens (100) entsprechend, und wenn der Treibriemen (100) stufenweise festgezogen wird, wird ein Hilfsradpressengriff (301) mit einer tellerförmigen Federfunktion und/oder der Hilfsriemen (312) mit einer vorgespannten Energie-Speicher-/-Freisetzungsfeder (302), der zwischen dem biegesteifen Pressengriff und dem Maschinenkorpus (800) installiert ist, verschoben, um Energie zu speichern, und wenn der Treibriemen (100) stufenweise gelöst wird, mit der energiefreisetzenden Verschiebung durch den Hilfsradpressengriff (301) mit einer tellerförmigen Federfunktion und/oder der vorgespannten Energie-Speicher-/-Freisetzungsfeder (302) und mit der Rotationsrichtungseinschränkung durch die einseitig gerichtete Rotationsübertragungsvorrichtung (300), kann der Treibriemen (100) den bimodal elliptischen aktiven Riemen (112) und den bimodal elliptischen passiven Riemen (213), der in der ursprünglichen Rotationsrichtung verbunden werden soll, ziehen, so dass eine energiefreisetzende Fahrt durchgeführt werden kann;
wobei, wenn die erste Pedale (102) und die zweite Pedale (202) zum Fahren getreten werden, das Geschwindigkeitsverhältnis zwischen dem bimodal elliptischen aktiven Riemen (112) und dem bimodal elliptischen passiven Riemen (213) während jedes Tretzeitraumes regelmäßig variiert wird.

5. Übertragungsradreihe mit regelmäßig variiertem Geschwindigkeitsverhältnis und mit gegenseitigem Verdrängungshilfsriemen zum Speichern/Freisetzen von kinetischer Energie gemäß Anspruch 1, wobei enthalten ist, dass diese in einem Fahrrad mit Pedalantrieb oder einem Fahrrad mit festem Pedalantrieb zum Sport übernommen wird, und dass der kreisförmige Riemen als aktiver Riemen und ein exzentrisch kreisförmiger Riemen als passiver Riemen übernommen wird, und ein Treibriemen und ein Hilfsriemen installiert sind, bestehend aus:
-- einem kreisförmigen aktiven Riemen (113): bestehend aus einem kreisähnlichen aktiven Riemen (113), der mit der aktiven Radwelle (111) installiert ist, wobei die einseitig gerichtete Übertragungsvorrichtung (300) zwischen der aktiven Radwelle (111) und dem Maschinenkorpus (800) installiert ist, wobei eine Seite der aktiven Radwelle (111) des kreisförmigen aktiven Riemens (113) durch eine erste Kurbel (101) angetrieben wird, die durch eine erste Pedale (102) verbunden ist, die auf einer ersten Pedalwelle (103) rotiert, um die Drehfahrt auszuführen, und wobei die andere Seite der aktiven Radwelle (111) durch eine zweite Kurbel (201) angetrieben wird, die durch eine zweite Pedale (202) verbunden ist, die auf einer zweiten Pedalwelle (203) rotiert, um die Drehfahrt auszuführen, wodurch ein exzentrisch kreisförmiger passiver Riemen (413) mit einer passiven Radwelle (211) über den Treibriemen (100) verbunden wird;
-- einem exzentrisch kreisförmigen passiven Riemen (413): bestehend aus einem exzentrisch kreisähnlichen passiven Riemen (413), der über den Treibriemen (100) verbunden ist, der vom kreisförmigen aktiven Riemen (113) angetrieben wird;
-- Treibriemen (100): bestehend aus einem ketten- oder zahnförmigen Treibriemen, wobei zwischen dem Treibriemen und dem Übertragungsrad ein nicht-freisetzendes synchrones Übertragungsverhältnis gebildet wird, wodurch ein nichtgleitendes synchrones Übertragungsradset strukturiert wird, wobei dieses Radset unter anderem aus einem kettenförmigen Treibriemen und einem Kettenrad oder einem zahnförmigen Riemen und einem zahnförmigen Treibriemen bestehen kann;
-- Hilfsriemenbaugruppe zum Speichern/Freisetzen von kinetischer Energie (700): installiert mit einem Hilfsriemen (312), wobei dieser Hilfsriemen (312) dazu dient, die Vorspannkraft aufzunehmen, die durch eine Vorspannvorrichtung eingebracht wird, die in dem Teil des Treibriemens (100) angeordnet ist, der zwischen der Stelle, an der der exzentrisch kreisförmige passive Riemen (413) und der Treibriemen (100) bereit sind, synchron kombiniert zu werden, und der Stelle, an der der kreisförmige aktive Riemen (113), der aus dem Treibriemen (100) freigegeben wird, definiert ist; wenn der kreisförmige aktive Riemen (113) regelmäßig den exzentrisch kreisförmigen passiven Riemen (413) antreibt, variiert die Festigkeit des Treibriemens (100) entsprechend, und wenn der Treibriemen (100) stufenweise festgezogen wird, wird ein Hilfsradpressengriff (301) mit einer tellerförmigen Federfunktion und/oder der Hilfsriemen (312) mit einer vorgespannten Energie-Speicher-/-Freisetzungsfeder (302), der zwischen dem biegesteifen Pressengriff und dem Maschinenkorpus (800) installiert ist, verschoben, um Energie zu speichern, und wenn der Treibriemen (100) stufenweise gelöst wird, mit der energiefreisetzenden Verschiebung durch den Hilfsradpressengriff (301) mit einer tellerförmigen Federfunktion und/oder der vorgespannten Energie-Speicher-/-Freisetzungsfeder (302) und mit der Rotationsrichtungseinschränkung durch die einseitig gerichtete Rotationsübertragungsvorrichtung (300), kann der Treibriemen (100) den kreisförmigen aktiven Riemen (113) und den exzentrisch kreisförmigen passiven Riemen (413), der in der ursprünglichen Rotationsrichtung verbunden werden soll, ziehen, so dass eine energiefreisetzende Fahrt durchgeführt werden kann; wobei, wenn die erste Pedale (102) und die zweite Pedale (202) zum Fahren getreten werden, das Geschwindigkeitsverhältnis zwischen dem kreisförmigen aktiven Riemen (112) und dem exzentrisch kreisförmigen passiven Riemen (413) während jedes Tretzeitraumes regelmäßig variiert wird.

6. Übertragungsradreihe mit regelmäßig variiertem Geschwindigkeitsverhältnis und mit gegenseitigem Verdrängungshilfsriemen zum Speichern/Freisetzen von kinetischer Energie gemäß Anspruch 1, wobei enthalten ist, dass diese in einem Fahrrad mit Pedalantrieb oder einem Fahrrad mit festem Pedalantrieb zum Sport übernommen wird, und dass der bimodal elliptische aktive Riemen (112) als aktiver Riemen und ein exzentrisch kreisförmiger Riemen als passiver Riemen übernommen wird, und ein Treibriemen und ein Hilfsriemen installiert sind, bestehend aus:
-- einem bimodal elliptischen aktiven Riemen (112): bestehend aus einem bimodal ellipsenartigen aktiven Riemen (112), der als aktive Riemenbaugruppe (500) gebildet werden soll und mit der aktiven Radwelle (111) installiert ist, wobei eine Seite der aktiven Radwelle (111) des bimodal elliptischen aktiven Riemens (112) durch eine erste Kurbel (101) angetrieben wird, die durch eine erste Pedale (102) verbunden ist, die auf einer ersten Pedalwelle (103) rotiert, um die Drehfahrt auszuführen, und wobei die andere Seite der aktiven Radwelle (111) durch eine zweite Kurbel (201) angetrieben wird, die durch eine zweite Pedale (202) verbunden ist, die auf einer zweiten Pedalwelle (203) rotiert, um die Drehfahrt auszuführen, wodurch ein bimodal elliptischer passiver Riemen (213) mit einer passiven Radwelle (211) über den Treibriemen (100) verbunden wird; wobei der Phasenwinkel des regelmäßig variierten Geschwindigkeitsverhältnisses des bimodal elliptischen aktiven Riemens (112) und des bimodal elliptischen passiven Riemens (213) in Kombination mit dem Treibriemen (100) relevant ist für den Phasenwinkel der ersten Kurbel (101) und die erste Pedale (102) und die zweite Kurbel (201) und die zweite Pedale (202), und ausgewählt werden kann, wenn der bimodal elliptische aktive Riemen (112) und der bimodal elliptische passive Riemen (213) mit dem Treibriemen (100) kombiniert werden;
-- einseitig gerichtete Rotationsübertragungsvorrichtung (300): bestehend aus einem strukturellen Glied mit der einseitig gerichteten Rotationsübertragungsfunktion, wie einer Einwegkupplung, einem Freilaufrad oder einer Ratschenstruktur mit derselben Funktion;
-- einem exzentrisch kreisförmigen passiven Riemen (413): bestehend aus einem exzentrisch kreisähnlichen passiven Riemen (413), der als passive Riemenbaugruppe (600) gebildet werden soll und über den Treibriemen (100) verbunden ist, der vom bimodal elliptischen aktiven Riemen (112) angetrieben wird;
-- Treibriemen (100): bestehend aus einem ketten- oder zahnförmigen Treibriemen, wobei zwischen dem Treibriemen, dem bimodal elliptischen aktiven Riemen (112) und dem exzentrisch kreisförmigen passiven Riemen (413) ein nicht-freisetzendes synchrones Übertragungsverhältnis gebildet wird, wodurch ein nichtgleitendes synchrones Übertragungsradset gebildet wird, wobei das mechanische Winkelphasenverhältnis der aktiven Riemenbaugruppe (500) und der passiven Riemenbaugruppe (600) zum Treibriemen (100) hinsichtlich der Funktion ausgewählt werden kann; wobei dieses Radset unter anderem aus einem kettenförmigen Treibriemen und einem Kettenrad oder einem zahnförmigen Riemen und einem zahnförmigen Treibriemen bestehen kann;
-- Hilfsriemenbaugruppe zum Speichern/Freisetzen von kinetischer Energie (700): installiert mit einem Hilfsriemen (312), wobei dieser Hilfsriemen (312) dazu dient, die Vorspannkraft aufzunehmen, die durch eine Vorspannvorrichtung eingebracht wird, die in dem Teil des Treibriemens (100) angeordnet ist, der zwischen der Stelle, an der der exzentrisch kreisförmige passive Riemen (413) und der Treibriemen (100) bereit sind, synchron kombiniert zu werden, und der Stelle, an der der bimodal elliptische aktive Riemen (112), der aus dem Treibriemen (100) freigegeben wird, definiert ist, wobei der Hilfsriemen (312) aus einem synchronisierenden Treibriemen oder einem nicht-synchronisierenden Treibriemen besteht; wenn der bimodal elliptische aktive Riemen (112) regelmäßig den exzentrisch kreisförmigen passiven Riemen (413) antreibt, variiert die Festigkeit des Treibriemens (100) entsprechend, und wenn der Treibriemen (100) stufenweise festgezogen wird, mit dem Hilfsradpressengriff mit einer tellerförmigen Federfunktion und/oder einer vorgespannten Vorspannfeder, wird der Hilfsriemen (312) verschoben, um Energie zu speichern, und wenn er gelöst wird, mit dem Hilfsradpressengriff mit einer tellerförmigen Federfunktion und/oder vorgespannten Feder zum Verschieben und Freisetzen von Energie und mit der Rotationsrichtungseinschränkung durch die einseitig gerichtete Rotationsübertragungsvorrichtung (300), kann der Treibriemen (100) den bimodal elliptischen aktiven Riemen (112) und den exzentrisch kreisförmigen passiven Riemen (413), der in der ursprünglichen Rotationsrichtung verbunden werden soll, ziehen, so dass eine energiefreisetzende Fahrt durchgeführt werden kann;
mit der offengelegten Struktur wird, wenn die erste Pedale (102) und die zweite Pedale (202) zum Fahren getreten werden, das Geschwindigkeitsverhältnis zwischen dem bimodal elliptischen aktiven Riemen (112) und dem exzentrisch kreisförmigen passiven Riemen (413) während jedes Tretzeitraumes regelmäßig variiert.

7. Übertragungsradreihe mit regelmäßig variiertem Geschwindigkeitsverhältnis und mit gegenseitigem Verdrängungshilfsriemen zum Speichern/Freisetzen von kinetischer Energie gemäß Anspruch 1-6, wobei die Struktur der Vorspannvorrichtung der Hilfsriemenbaugruppe zum Speichern/Freisetzen von Energie (700) wie folgt aussieht:
1) Ein Ende des Hilfsradpressengriffs (301) ausgebildet als biegesteife und schwingbare Stützarmstruktur ist schwingbar mit dem Maschinenkorpus (800) kombiniert, und eine vorgespannte Energie-Speicher-/-Freisetzungsfeder (302) ist zwischen den beiden oben genannten installiert, und das andere Ende ist mit einer Hilfsradwelle (311) installiert, die mit dem Hilfsriemen (312) installiert werden soll; oder
2) Ein Ende des Hilfsradpressengriffs mit einer tellerförmigen Federfunktion ist mit dem Maschinenkorpus (800) kombiniert, um den Hilfsradpressengriff (301) und die vorgespannte Energie-Speicher-/-Freisetzungsfeder (302) zu ersetzen, und das andere Ende des Hilfsradpressengriffs mit einer tellerförmigen Federfunktion ist mit der Hilfsradwelle (311) installiert, und der Hilfsriemen (312) kann die Vorspannkraft aufnehmen, die der Hilfsradpressengriff mit der tellerförmigen Federfunktion ausübt.

8. Übertragungsradreihe mit regelmäßig variiertem Geschwindigkeitsverhältnis und mit gegenseitigem Verdrängungshilfsriemen zum Speichern/Freisetzen von kinetischer Energie gemäß Anspruch 1-7, wobei die Strukturmittel der Hilfsriemenbaugruppe zum Speichern/Freisetzen von Energie (700) Folgendes umfassen:
-- Das distale Ende des Hilfsradpressengriffs (301), der schwingbar am Maschinenkorpus (800) installiert ist, ist mit einem ersten Hilfsriemen (312) installiert; der freisetzende Teil des Treibriemens (100), der aus der passiven Riemenbaugruppe (600) freisetzt, ist so installiert, dass der Hilfsradpressengriff (301) in der Lage ist, entlang des Maschinenkorpus (800) zu schwingen, um die Vorspannkraft von außen im normalen Zustand nach innen zu richten; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert; der einrastende Teil des Treibriemens (100), der bereit ist, in die passive Riemenbaugruppe (600) einzutreten, ist so installiert, dass der Hilfsradpressengriff (301) in der Lage ist, entlang des Maschinenkorpus (800) zu schwingen, um die Vorspannkraft im normalen Zustand von innen nach außen zu richten; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert; der freisetzende Teil des Treibriemens (100), der aus der passiven Riemenbaugruppe (600) freisetzt, ist so installiert, dass der Hilfsradpressengriff (301) in der Lage ist, entlang des Maschinenkorpus (800) zu schwingen, um die Vorspannkraft im normalen Zustand von innen nach außen zu erweitern; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert; der freisetzende Teil des Treibriemens (100), der aus der passiven Riemenbaugruppe (600) freisetzt, ist so installiert, dass der Hilfsradpressengriff (301) in der Lage ist, entlang des Maschinenkorpus (800) zu schwingen, um die Vorspannkraft im normalen Zustand von außen nach innen zu richten; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert; der freisetzende Teil des Treibriemens (100), der aus der passiven Riemenbaugruppe (600) freisetzt, ist so installiert, dass der Hilfsradpressengriff (301) in der Lage ist, entlang des Maschinenkorpus (800) zu schwingen, um die Vorspannkraft im normalen Zustand von außen nach innen zu richten; die vorgespannte Energie-Speicher-/-Freisetzungsfeder (302) und den Hilfsriemen (312); und der einrastende Teil des Treibriemens (100), der bereit ist, in die passive Riemenbaugruppe (600) einzutreten, ist so installiert, dass der Hilfsradpressengriff (301) in der Lage ist, entlang des Maschinenkorpus (800) zu schwingen, um die Vorspannkraft im normalen Zustand von innen nach außen zu erweitern; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert; der freisetzende Teil des Treibriemens (100), der aus der passiven Riemenbaugruppe (600) freisetzt, ist so installiert, dass der Hilfsradpressengriff (301) in der Lage ist, entlang des Maschinenkorpus (800) zu schwingen, um die Vorspannkraft im normalen Zustand von innen nach außen zu erweitern; die vorgespannte Energie-Speicher-/-Freisetzungsfeder (302) und den Hilfsriemen (312); und der einrastende Teil des Treibriemens (100), der bereit ist, in die passive Riemenbaugruppe (600) einzutreten, ist so installiert, dass der Hilfsradpressengriff (301) in der Lage ist, entlang des Maschinenkorpus (800) zu schwingen, um die Vorspannkraft im normalen Zustand von außen nach innen zu richten; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert; der freisetzende Teil des Treibriemens (100), der aus der passiven Riemenbaugruppe (600) freisetzt, ist so installiert, dass der Hilfsradpressengriff (301) in der Lage ist, entlang des Maschinenkorpus (800) zu schwingen, um die Vorspannkraft im normalen Zustand von innen nach außen zu erweitern; die vorgespannte Energie-Speicher-/-Freisetzungsfeder (302) und den Hilfsriemen (312); und der einrastende Teil des Treibriemens (100), der bereit ist, in die passive Riemenbaugruppe (600) einzutreten, ist so installiert, dass der Hilfsradpressengriff (301) in der Lage ist, entlang des Maschinenkorpus (800) zu schwingen, um die Vorspannkraft im normalen Zustand von innen nach außen zu richten; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert, der am freisetzenden Teil des Treibriemens (100) einrastet, der aus der passiven Riemenbaugruppe (600) freisetzt, mit der Funktion der vorgespannten Energie-Speicher-/-Freisetzungsfeder (302), wobei der Hilfsradpressengriff (301) vorgespannt und von innen nach außen erweitert wird; und das distale Ende des Hilfsradpressengriffs (301), der schwingbar am Maschinenkorpus (800) installiert ist, ist mit einem zweiten Hilfsriemen (312) installiert, der am einrastenden Teil des Treibriemens (100) einrastet, der bereit ist, mit der passiven Riemenbaugruppe (600) einzurasten, mit der Funktion der vorgespannten Energie-Speicher-/-Freisetzungsfeder (302), wobei der Hilfsradpressengriff (301) vorgespannt und von innen nach außen erweitert wird; und eine zweiseitig gerichtete, sich von innen nach außen erweiternde, vorgespannte Energie-Speicher-/-Freisetzungsfeder (4021) ist darüber hinaus zwischen den beiden Hilfsriemen (312) und dem Hilfsradpressengriff (301) installiert; oder
-- Das distale Ende des Hilfsradpressengriffs (301), der schwingbar am Maschinenkorpus (800) installiert ist, ist mit einem ersten Hilfsriemen (312) installiert; der freisetzende Teil des Treibriemens (100), der aus der passiven Riemenbaugruppe (600) freisetzt, ist so installiert, dass der Hilfsradpressengriff (301) in der Lage ist, entlang des Maschinenkorpus (800) zu schwingen, um die Vorspannkraft im normalen Zustand von außen nach innen zu richten; die vorgespannte Energie-Speicher-/-Freisetzungsfeder (302) und den Hilfsriemen (312); und der einrastende Teil des Treibriemens (100), der bereit ist, in die passive Riemenbaugruppe (600) einzutreten, ist so installiert, dass der Hilfsradpressengriff (301) in der Lage ist, entlang des Maschinenkorpus (800) zu schwingen, um die Vorspannkraft im normalen Zustand von außen nach innen zu richten; die vorgespannte Energie-Speicher-/-Freisetzungsfeder (302) und den Hilfsriemen (312); oder
-- Das distale Ende des Hilfsradpressengriffs (301), der schwingbar am Maschinenkorpus (800) installiert ist, ist mit einem ersten Hilfsriemen (312) installiert, der am freisetzenden Teil des Treibriemens (100) einrastet, der aus der passiven Riemenbaugruppe (600) freisetzt, mit der Funktion der vorgespannten Energie-Speicher-/-Freisetzungsfeder (302), wobei der Hilfsradpressengriff (301) vorgespannt und von außen nach innen erweitert wird; und das distale Ende des anderen Hilfsradpressengriffs (301), der schwingbar am Maschinenkorpus (800) installiert ist, ist mit einem zweiten Hilfsriemen (312) installiert, der am einrastenden Teil des Treibriemens (100) einrastet, der bereit ist, mit der passiven Riemenbaugruppe (600) einzurasten, mit der Funktion der vorgespannten Energie-Speicher-/-Freisetzungsfeder (302), wobei der Hilfsradpressengriff (301) vorgespannt und von außen nach innen gedrückt wird; und eine zweiseitig gerichtete, sich von außen nach innen zusammenziehende, vorgespannte Energie-Speicher-/-Freisetzungsfeder (4022) ist darüber hinaus zwischen den beiden Hilfsriemen (312) und dem Hilfsradpressengriff (301) installiert; oder
-- Die beiden Hilfsriemen (312) sind jeweils an einem Ende er entsprechenden Hilfsradpressengriffe (301) installiert; das andere Ende der einzelnen Hilfsradpressengriffe (301) ist durch die Schwingwelle des Hilfsradpressengriffs (303) schwingbar kombiniert mit dem Maschinenkorpus (800); vorgespannte Energie-Speicher-/-Freisetzungsfedern (302) sind jeweils zwischen den beiden Hilfsradpressengriffen (301) und dem Maschinenkorpus (800) installiert; die beiden Hilfsriemen (312) sind an der Außenseite des freisetzenden Teils des Treibriemens (100), der von der passiven Riemenbaugruppe (600) freisetzt, installiert; die beiden Hilfsriemen (312) pressen jeweils den Treibriemen (100) nach innen, so dass sich ein konkaver Biegungswinkel bildet, und mit der Funktion der vorgespannten Energie-Speicher-/-Freisetzungsfedern (302) werden die genannten Hilfsradpressengriffe (301) vorgespannt und von außen nach innen gedrückt; oder
-- Die beiden Hilfsriemen (312) sind jeweils an einem Ende er entsprechenden Hilfsradpressengriffe (301) installiert; das andere Ende der einzelnen Hilfsradpressengriffe (301) ist durch die Schwingwelle des Hilfsradpressengriffs (303) schwingbar kombiniert mit dem Maschinenkorpus (800); vorgespannte Energie-Speicher-/-Freisetzungsfedern (302) sind jeweils zwischen den beiden Hilfsradpressengriffen (301) und dem Maschinenkorpus (800) installiert; die beiden Hilfsriemen (312) sind an der Innenseite des freisetzenden Teils des Treibriemens (100), der von der passiven Riemenbaugruppe (600) freisetzt, installiert; die beiden Hilfsriemen (312) erweitern sich nach außen, um den Treibriemen (100) zu drücken, so dass sich ein konvexer Biegungswinkel bildet, und mit der Funktion der vorgespannten Energie-Speicher-/-Freisetzungsfedern (302) werden die genannten Hilfsradpressengriffe (301) vorgespannt und von innen nach außen gedrückt; oder
-- Das distale Ende des Hilfsradpressengriffs (301), der schwingbar an der passiven Radwelle (211) installiert ist, ist mit einem ersten Hilfsriemen (312) installiert, der am freisetzenden Teil des Treibriemens (100) einrastet, der aus der passiven Riemenbaugruppe (600) freisetzt, mit der Funktion der vorgespannten Energie-Speicher-/-Freisetzungsfeder (302), wobei der Hilfsradpressengriff (301) vorgespannt und von außen nach innen gedrückt wird, wodurch der eingerastete Treibriemen (100) mit einem konkaven Biegungswinkel gebildet wird; und das distale Ende des anderen Hilfsradpressengriffs (301), der schwingbar an der passiven Radwelle (211) installiert ist, ist mit einem zweiten Hilfsriemen (312) installiert, der am einrastenden Teil des Treibriemens (100) einrastet, der bereit ist, mit der passiven Riemenbaugruppe (600) einzurasten, mit der Funktion der vorgespannten Energie-Speicher-/-Freisetzungsfeder (302), wobei der Hilfsradpressengriff (301) vorgespannt und von außen nach innen gedrückt wird, wodurch der eingerastete Treibriemen (100) mit einem konkaven Biegungswinkel gebildet wird; und eine zweiseitig gerichtete, sich von außen nach innen zusammenziehende, vorgespannte Energie-Speicher-/-Freisetzungsfeder (4022) ist darüber hinaus zwischen den beiden Hilfsriemen (312) und dem Hilfsradpressengriff (301) installiert.

## Revendications

1. Série de roues à transmission à rapport de vitesse périodiquement varié et ayant une poulie auxiliaire à déplacement réciproque (312) permettant de stocker/libérer l'énergie cinétique, laquelle comporte une source d'énergie entraînant une poulie active (112, 113) présentant un élément de sortie à rotation unidirectionnelle, dans laquelle, lorsqu'une courroie de transmission (100) est tendue pendant que la poulie active entraîne une poulie passive (212, 213) selon des rapports de vitesse périodiquement variés, la poulie auxiliaire (312) d'un ensemble de poulie auxiliaire pour stocker/libérer l'énergie cinétique (700) est configurée pour stocker l'énergie de manière à former une force de précontrainte, et lorsque la force appliquée par la poulie active à la poulie passive par le biais de la courroie de transmission est à zéro ou relativement plus petite, la poulie auxiliaire (312) peut libérer de l'énergie de manière à appliquer une force à la courroie de transmission, du fait que la poulie active à laquelle est accouplée la coupe transversale est retenue par l'élément de transmission unidirectionnel, la courroie de transmission pouvant entraîner la poulie passive à fonctionner dans la direction de rotation initiale pour renvoyer l'énergie cinétique, dans laquelle
la série de roues de transmission comprend les éléments suivants ; une poulie auxiliaire à déplacement réciproque pour stocker/libérer l'énergie cinétique est dotée d'une relation de transmission synchrone sans libération entre la courroie de transmission (100) et la roue de transmission, formant ainsi un ensemble de roues à transmission synchrone non-coulissant, l'ensemble de roues étant constitué d'une courroie de transmission en forme de chaîne et d'une roue à chaîne, ou d'une poulie dentée et d'une courroie de transmission dentée ; et dans laquelle :
l'ensemble de poulie active (500) est constitué d'un arbre de roue active (111) et de la poulie active, la poulie active étant combinée avec l'arbre de roue active (111), l'arbre de roue active (111) étant conçu pour entrer l'énergie cinétique de rotation, la poulie active comprenant diverses poulies de transmission présentant différents rayons de transmission et différentes dimensions et une forme circulaire, si la poulie passive n'est pas circulaire ou autre, présentant une forme elliptique bimodale, ou circulaire excentrique, ou elliptique excentrique ou elliptique bimodale excentrique ;
la poulie active présentant un élément de sortie rotatif unidirectionnel comprenant l'un ou plusieurs des arrangements suivants, comprenant 1) un dispositif de transmission rotatif unidirectionnel (300) installé entre l'ensemble de poulie active (500) et le corps de machine ; et 2) un dispositif de transmission à rotation unidirectionnelle (300) installé entre l'arbre de roue de l'ensemble de poulie active (500) et le corps de machine ;
un ensemble de poulie passive (600) : comprenant un arbre de roue passive (211) et la poulie passive, la poulie passive étant conçue pour tourner sur l'arbre de roue passive (211), la poulie passive comprenant diverses poulies de transmission, présentant différents rayons de transmission et différentes dimensions et une forme circulaire si la poulie active n'est pas circulaire ou autre, présentant une forme elliptique bimodale, ou circulaire excentrique, ou des formes elliptiques excentriques ou elliptiques bimodales excentriques ;
un ensemble de poulie auxiliaire pour stocker/libérer l'énergie cinétique (700) comprenant la poulie auxiliaire (312), configuré pour fournir une force de précontrainte appliquée par un dispositif de précontrainte, est disposé au niveau de la partie de la courroie de transmission (100) définie entre l'endroit où la poulie passive et la courroie de transmission (100) sont combinées de façon synchrone, et l'endroit où la poulie active est libérée de la courroie de transmission (100) ; de sorte que lorsque la poulie active de l'ensemble de poulie active (500) entraîne périodiquement la poulie passive de l'ensemble de poulie passive (600), la tension de la courroie de transmission (100) varie en conséquence, et lorsque la courroie de transmission (100) est tendue progressivement, un manche de pression de roue auxiliaire (301) assurant une fonction de ressort en forme de plaque et/ou la poulie auxiliaire (312) présentant un ressort de stockage/libération d'énergie sous précontrainte (302) installé entre un manche de pression rigide et le corps de machine (800), le manche de pression de roue auxiliaire (301) est déplacé pour stocker de l'énergie, et lorsque la courroie de transmission (100) est progressivement relâchée, le déplacement libérateur d'énergie du manche de pression de roue auxiliaire (301) agit sur la courroie de transmission (100), laquelle peut alors tirer la poulie active et la poulie passive dans la direction de rotation initiale, de manière à créer un entraînement de libération d'énergie ; et avec la structure décrite, le rapport de vitesse d'entraînement de la poulie passive varie périodiquement.

2. Série de roues à transmission à rapport de vitesse périodiquement varié et ayant une poulie auxiliaire à déplacement réciproque (312) permettant de stocker/libérer l'énergie cinétique selon la revendication 1, comprenant l'utilisation dans un vélo avec entraînement à pédales ou dans un vélo à entraînement fixe à pédales pour l'exercice, et une poulie elliptique étant utilisée comme poulie active et une poulie circulaire étant utilisée comme poulie passive, et une courroie de transmission et une poulie auxiliaire étant installées, comprenant :
- une poulie active elliptique bimodale (112) : comprenant une poulie active du genre elliptique bimodale (112) installée avec l'arbre de roue active (111), un côté de l'arbre de roue active (111) de la poulie active elliptique bimodale (112) étant entraîné par une première manivelle (101) reliée par une première pédale (102) en rotation sur un premier arbre de pédale (103) pour réaliser l'entraînement rotatif, l'autre côté de l'arbre de roue active (111) étant entraîné par une deuxième manivelle (201) reliée par une deuxième pédale (202) en rotation sur un deuxième arbre de pédale (203) pour réaliser l'entraînement rotatif, reliant ainsi une poulie passive circulaire (212) présentant un arbre de roue passive (211) par la courroie de transmission (100) ;
- une poulie passive circulaire (212) : comprenant une poulie passive du genre circulaire (212), conçue pour être reliée par la courroie de transmission (100) entraînée par la poulie active elliptique bimodale (112) ;
- une courroie de transmission (100) : comprenant une chaîne ou une courroie de transmission (100) dentée, une relation de transmission synchrone sans libération étant formée entre la courroie de transmission et la roue de transmission, structurant ainsi un ensemble de roues de transmission synchrone non-coulissant, ledit ensemble de roues comprenant une courroie de transmission en forme de chaîne et une roue à chaîne, ou une poulie dentée et une courroie de transmission dentée ;
- un ensemble de poulie auxiliaire pour stocker/libérer l'énergie cinétique (700) : installé avec une poulie auxiliaire (312), ladite poulie auxiliaire (312) servant à supporter la force de précontrainte appliquée par un dispositif de précontrainte étant disposée au niveau d'une partie de la courroie de transmission (100) qui est définie entre l'endroit où la poulie passive et la courroie de transmission (100) sont prêtes à être combinées de façon synchrone, et l'endroit où la poulie active elliptique bimodale (112) est libérée de la courroie de transmission (100) ; lorsque la poulie active elliptique bimodale (112) entraîne périodiquement la poulie passive circulaire (212), la tension de la courroie de transmission (100) varie en conséquence, lorsque la courroie de transmission (100) est tendue progressivement, un manche de pression de roue auxiliaire (301) assurant une fonction de ressort en forme de plaque et/ou la poulie auxiliaire (312) présentant un ressort de stockage/libération d'énergie sous précontrainte (302) et installé entre le manche de pression rigide et le corps de machine (800) est déplacé pour stocker de l'énergie, lorsque la courroie de transmission (100) est progressivement relâchée, avec le déplacement libérateur d'énergie du manche de pression de roue auxiliaire (301) assurant une fonction de ressort en forme de plaque et/ou du ressort de stockage/libération d'énergie sous précontrainte (302), et avec la restriction de direction de rotation fournie par le dispositif de transmission rotatif unidirectionnel (300), la courroie de transmission (100) est en mesure de tirer la poulie active elliptique bimodale (112) à relier dans la direction de rotation initiale, de manière à créer un entraînement de libération d'énergie ;
dans laquelle, lorsque la première pédale (102) et la deuxième pédale (202) sont actionnées pour le déplacement, le rapport de vitesse entre la poulie active elliptique bimodale (112) et la poulie passive circulaire (212) est varié périodiquement pendant chaque période de pédalage.

3. Série de roues à transmission à rapport de vitesse périodiquement varié et ayant une poulie auxiliaire à déplacement réciproque permettant de stocker/libérer l'énergie cinétique selon la revendication 1, comprenant l'utilisation dans un vélo avec entraînement à pédales ou dans un vélo à entraînement fixe à pédales pour l'exercice, et une poulie circulaire étant utilisée comme poulie active et une poulie elliptique étant utilisée comme poulie passive, et une courroie de transmission et une poulie auxiliaire étant installées, comprenant :
- une poulie active circulaire (113) : comprenant une poulie active du genre circulaire (113) installée avec l'arbre de roue active (111), un côté de l'arbre de roue active (111) de la poulie active circulaire (113) étant entraîné par une première manivelle (101) reliée par une première pédale (102) en rotation sur un premier arbre de pédale (103) pour réaliser l'entraînement rotatif, l'autre côté de l'arbre de roue active (111) étant entraîné par une deuxième manivelle (201) reliée par une deuxième pédale (202) en rotation sur un deuxième arbre de pédale (203) pour réaliser l'entraînement rotatif, reliant ainsi une poulie passive elliptique bimodale (213) présentant un arbre de roue passive (211) par la courroie de transmission (100) ;
- une poulie passive elliptique bimodale (213) : comprenant une poulie passive elliptique bimodale (213) ou une poulie passive du genre elliptique bimodale, reliée par la courroie de transmission (100) entraînée par la poulie active circulaire (113) ;
- une courroie de transmission (100) : comprenant une chaîne ou une courroie de transmission dentée, une relation de transmission synchrone sans libération étant formée entre la courroie de transmission et la roue de transmission, structurant ainsi un ensemble de roues de transmission synchrone non-coulissant, ledit ensemble de roues comprenant une courroie de transmission en forme de chaîne et une roue à chaîne, ou une poulie dentée et une courroie de transmission dentée ;
- un ensemble de poulie auxiliaire pour stocker/libérer l'énergie cinétique (700) : installé avec une poulie auxiliaire (312), ladite poulie auxiliaire (312) servant à supporter la force de précontrainte appliquée par un dispositif de précontrainte étant disposée au niveau de la partie de la courroie de transmission (100) qui est définie entre l'endroit où la poulie passive elliptique bimodale (213) et la courroie de transmission (100) sont prêtes à être combinées de façon synchrone, et l'endroit où la poulie active circulaire (113) est libérée de la courroie de transmission (100) ; lorsque la poulie active circulaire (113) entraîne périodiquement la poulie passive elliptique bimodale (213), la tension de la courroie de transmission (100) varie en conséquence, lorsque la courroie de transmission (100) est tendue progressivement, un manche de pression de roue auxiliaire (301) assurant une fonction de ressort en forme de plaque et/ou la poulie auxiliaire (312) présentant un ressort de stockage/libération d'énergie sous précontrainte (302) et installé entre un manche de pression rigide et le corps de machine (800) est déplacé pour stocker de l'énergie, lorsque la courroie de transmission (100) est progressivement relâchée, avec le déplacement libérateur d'énergie du manche de pression de roue auxiliaire (301) assurant une fonction de ressort en forme de plaque et/ou du ressort de stockage/libération d'énergie sous précontrainte (302), et avec la restriction de direction de rotation fournie par le dispositif de transmission rotatif unidirectionnel (300), la courroie de transmission (100) est en mesure de tirer la poulie active circulaire (113) et la poulie passive elliptique bimodale (213) à relier dans la direction de rotation initiale, de manière à créer un entraînement de libération d'énergie ;
dans laquelle, lorsque la première pédale (102) et la deuxième pédale (202) sont actionnées pour le déplacement, le rapport de vitesse entre la poulie active circulaire (113) et la poulie passive elliptique bimodale (213) est varié périodiquement pendant chaque période de pédalage.

4. Série de roues à transmission à rapport de vitesse périodiquement varié et ayant une poulie auxiliaire à déplacement réciproque permettant de stocker/libérer l'énergie cinétique selon la revendication 1, comprenant l'utilisation dans un vélo avec entraînement à pédales ou dans un vélo à entraînement fixe à pédales pour l'exercice, et la poulie elliptique étant utilisée comme poulie active et une poulie elliptique présentant une différence de 90° par rapport à la poulie active étant utilisée comme poulie passive, et une courroie de transmission et une poulie auxiliaire étant installées, comprenant :
- une poulie active elliptique bimodale (112) : comprenant une poulie active du genre elliptique bimodale (112) installée avec l'arbre de roue active (111), un côté de l'arbre de roue active (111) de la poulie active elliptique bimodale (112) étant entraîné par une première manivelle (101) reliée par une première pédale (102) en rotation sur un premier arbre de pédale (103) pour réaliser l'entraînement rotatif, l'autre côté de l'arbre de roue active (111) étant entraîné par une deuxième manivelle (201) reliée par une deuxième pédale (202) en rotation sur un deuxième arbre de pédale (203) pour réaliser l'entraînement rotatif, reliant ainsi une poulie passive elliptique bimodale (213) présentant un arbre de roue passive (211) par la courroie de transmission (100) ;
- une poulie passive elliptique bimodale (213) : comprenant une poulie passive du genre elliptique bimodale (213), reliée par la courroie de transmission (100) entraînée par la poulie active circulaire (113) ;
- une courroie de transmission (100) : comprenant une chaîne ou une courroie de transmission dentée, une relation de transmission synchrone sans libération étant formée entre la courroie de transmission et la roue de transmission, structurant ainsi un ensemble de roues de transmission synchrone non-coulissant, ledit ensemble de roues comprenant une courroie de transmission en forme de chaîne et une roue à chaîne, ou une poulie dentée et une courroie de transmission dentée ;
- un ensemble de poulie auxiliaire pour stocker/libérer l'énergie cinétique (700) : installé avec une poulie auxiliaire (312), ladite poulie auxiliaire (312) servant à supporter la force de précontrainte appliquée par un dispositif de précontrainte étant disposée au niveau de la partie de la courroie de transmission (100) qui est définie entre l'endroit où la poulie passive elliptique bimodale (213) et la courroie de transmission (100) sont prêtes à être combinées de façon synchrone, et l'endroit où la poulie active elliptique bimodale (112) est libérée de la courroie de transmission (100) ; lorsque la poulie active elliptique bimodale (112) entraîne périodiquement la poulie passive elliptique bimodale (213), la tension de la courroie de transmission (100) varie en conséquence, lorsque la courroie de transmission (100) est tendue progressivement, un manche de pression de roue auxiliaire (301) assurant une fonction de ressort en forme de plaque et/ou la poulie auxiliaire (312) présentant un ressort de stockage/libération d'énergie sous précontrainte (302) et installé entre un manche de pression rigide et le corps de machine (800) est déplacé pour stocker de l'énergie, lorsque la courroie de transmission (100) est progressivement relâchée, avec le déplacement libérateur d'énergie du manche de pression de roue auxiliaire (301) assurant une fonction de ressort en forme de plaque et/ou du ressort de stockage/libération d'énergie sous précontrainte (302), et avec la restriction de direction de rotation fournie par le dispositif de transmission rotatif unidirectionnel (300), la courroie de transmission (100) est en mesure de tirer la poulie active elliptique bimodale (112) et la poulie passive elliptique bimodale (213) à relier dans la direction de rotation initiale, de manière à créer un entraînement de libération d'énergie ;
dans laquelle, lorsque la première pédale (102) et la deuxième pédale (202) sont actionnées pour le déplacement, le rapport de vitesse entre la poulie active elliptique bimodale (112) et la poulie passive elliptique bimodale (213) est varié périodiquement pendant chaque période de pédalage.

5. Série de roues à transmission à rapport de vitesse périodiquement varié et ayant une poulie auxiliaire à déplacement réciproque permettant de stocker/libérer l'énergie cinétique selon la revendication 1, comprenant l'utilisation dans un vélo avec entraînement à pédales ou dans un vélo à entraînement fixe à pédales pour l'exercice, et la poulie circulaire étant utilisée comme poulie active et une poulie circulaire excentrique étant utilisée comme poulie passive, et une courroie de transmission et une poulie auxiliaire étant installées, comprenant :
- poulie active circulaire (113) : comprenant une poulie active du genre circulaire (113) installée avec l'arbre de roue active (111), le dispositif de transmission rotatif unidirectionnel (300) étant installé entre l'arbre de roue active (111) et le corps de machine (800), un côté de l'arbre de roue active (111) de la poulie active circulaire (113) étant entraîné par une première manivelle (101) reliée par une première pédale (102) en rotation sur un premier arbre de pédale (103) pour réaliser l'entraînement rotatif, l'autre côté de l'arbre de roue active (111) étant entraîné par une deuxième manivelle (201) reliée par une deuxième pédale (202) en rotation sur un deuxième arbre de pédale (203) pour réaliser l'entraînement rotatif, reliant ainsi une poulie passive circulaire excentrique (413) présentant un arbre de roue passive (211) par la courroie de transmission (100) ;
- une poulie passive circulaire excentrique (413) : comprenant une poulie passive du genre circulaire excentrique (413), reliée par la courroie de transmission (100) entraînée par la poulie active circulaire (113) ;
- une courroie de transmission (100) : comprenant une chaîne ou une courroie de transmission dentée, une relation de transmission synchrone sans libération étant formée entre la courroie de transmission et la roue de transmission, structurant ainsi un ensemble de roues de transmission synchrone non-coulissant, ledit ensemble de roues comprenant une courroie de transmission en forme de chaîne et une roue à chaîne, ou une poulie dentée et une courroie de transmission dentée ;
- un ensemble de poulie auxiliaire pour stocker/libérer l'énergie cinétique (700) : installé avec une poulie auxiliaire (312), ladite poulie auxiliaire (312) servant à supporter la force de précontrainte appliquée par un dispositif de précontrainte étant disposée au niveau de la partie de la courroie de transmission (100) qui est définie entre l'endroit où la poulie passive circulaire excentrique (413) et la courroie de transmission (100) sont prêtes à être combinées de façon synchrone, et l'endroit où la poulie active circulaire (113) est libérée de la courroie de transmission (100) ; lorsque la poulie active circulaire (113) entraîne périodiquement la poulie passive circulaire excentrique (413), la tension de la courroie de transmission (100) varie en conséquence, lorsque la courroie de transmission (100) est tendue progressivement, un manche de pression de roue auxiliaire (301) assurant une fonction de ressort en forme de plaque et/ou la poulie auxiliaire (312) présentant un ressort de stockage/libération d'énergie sous précontrainte (302) et installé entre un manche de pression rigide et le corps de machine (800) est déplacé pour stocker de l'énergie, lorsque la courroie de transmission (100) est progressivement relâchée, avec le déplacement libérateur d'énergie du manche de pression de roue auxiliaire (301) assurant une fonction de ressort en forme de plaque et/ou du ressort de stockage/libération d'énergie sous précontrainte (302), et avec la restriction de direction de rotation fournie par le dispositif de transmission rotatif unidirectionnel (300), la courroie de transmission (100) est en mesure de tirer la poulie active circulaire (113) et la poulie passive circulaire excentrique (413) à relier dans la direction de rotation initiale, de manière à créer un entraînement de libération d'énergie ;
dans laquelle, lorsque la première pédale (102) et la deuxième pédale (202) sont actionnées pour le déplacement, le rapport de vitesse entre la poulie active circulaire (113) et la poulie passive circulaire excentrique (413) est varié périodiquement pendant chaque période de pédalage.

6. Série de roues à transmission à rapport de vitesse périodiquement varié et ayant une poulie auxiliaire à déplacement réciproque (312) permettant de stocker/libérer l'énergie cinétique selon la revendication 1, comprenant l'utilisation dans un vélo avec entraînement à pédales ou dans un vélo à entraînement fixe à pédales pour l'exercice, et la poulie active elliptique bimodale (112) étant utilisée comme poulie active et une poulie circulaire excentrique étant utilisée comme poulie passive, comprenant :
- une poulie active elliptique bimodale (112) : comprenant une poulie active du genre elliptique bimodale (112) formée comme étant l'ensemble de poulie active (500), installée avec l'arbre de roue active (111), un côté de l'arbre de roue active (111) de la poulie active elliptique bimodale (112) étant entraîné par une première manivelle (101) reliée par une première pédale (102) en rotation sur un premier arbre de pédale (103) pour réaliser l'entraînement rotatif, l'autre côté de l'arbre de roue active (111) étant entraîné par une deuxième manivelle (201) reliée par une deuxième pédale (202) en rotation sur un deuxième arbre de pédale (203) pour réaliser l'entraînement rotatif, reliant ainsi une poulie passive elliptique bimodale (213) présentant un arbre de roue passive (211) par la courroie de transmission (100) ; l'angle de phase du rapport de vitesse varié périodiquement de la poulie active elliptique bimodale (112) et de la poulie passive elliptique bimodale (213) combinées avec la courroie de transmission (100) est significatif pour l'angle de phase entre la première manivelle (101) et la première pédale (102) et la deuxième manivelle (201) et la deuxième pédale (202), et peut être sélectionné lorsque la poulie active elliptique bimodale (112) et la poulie passive elliptique bimodale (213) sont combinées avec la courroie de transmission (100) ;
- dispositif de transmission rotatif unidirectionnel (300) : comprenant un élément structurel présentant une fonction de transmission par rotation unidirectionnelle, telle qu'un embrayage unidirectionnel, un embrayage à roue libre ou une structure de cliquet présentant la même fonction ;
- une poulie passive circulaire excentrique (413) : comprenant une poulie passive du genre circulaire excentrique (413) formée comme étant l'ensemble de poulie passive (600), reliée par la courroie de transmission (100) entraînée par la poulie active elliptique bimodale (112) ;
- une courroie de transmission (100) : comprenant une chaîne ou une courroie de transmission dentée, une relation de transmission synchrone sans libération étant formée entre la courroie de transmission, la poulie active elliptique bimodale (112) et la poulie passive circulaire excentrique (413), formant ainsi un ensemble de roues de transmission synchrone non-coulissant, la relation d'angle de phase mécanique de l'ensemble de poulie active (500) et de l'ensemble de poulie passive (600) par rapport à la courroie de transmission (100) pouvant être sélectionnée par rapport à la fonction ; ledit ensemble de roues comprenant une courroie de transmission en forme de chaîne et une roue à chaîne, ou une poulie dentée et une courroie de transmission dentée ;
- un ensemble de poulie auxiliaire pour stocker/libérer l'énergie cinétique (700) : installé avec une poulie auxiliaire (312), ladite poulie auxiliaire (312) servant à supporter la force de précontrainte appliquée par un dispositif de précontrainte étant disposée au niveau de la partie de la courroie de transmission (100) qui est définie entre l'endroit où la poulie passive circulaire excentrique (413) et la courroie de transmission (100) sont prêtes à être combinées de façon synchrone, et l'endroit où la poulie active elliptique bimodale (112) est libérée de la courroie de transmission (100), la poulie auxiliaire (312) comprenant une poulie de transmission à synchronisation et une poulie de transmission sans synchronisation ; lorsque la poulie active elliptique bimodale (112) entraîne périodiquement la poulie passive circulaire excentrique (413), la tension de la courroie de transmission (100) varie en conséquence, lorsque la courroie de transmission (100) est tendue progressivement, avec le manche de pression de roue auxiliaire assurant une fonction de ressort en forme de plaque et/ou un ressort sous précontrainte pour la précontrainte, la poulie auxiliaire (312) est déplacée pour stocker de l'énergie ; lorsqu'elle est relâchée, avec le manche de pression de roue auxiliaire assurant une fonction de ressort en forme de plaque et/ou le ressort sous précontrainte pour le déplacement et la libération de l'énergie, et avec la restriction de direction de rotation fournie par le dispositif de transmission rotatif unidirectionnel (300), la courroie de transmission (100) est en mesure de tirer la poulie active elliptique bimodale (112) et la poulie passive circulaire excentrique (413) à relier dans la direction de rotation initiale, de manière à créer un entraînement de libération d'énergie ;
avec la structure décrite, lorsque la première pédale (102) et la deuxième pédale (202) sont actionnées pour le déplacement, le rapport de vitesse entre la poulie active elliptique bimodale (112) et la poulie passive circulaire excentrique (413) est varié périodiquement pendant chaque période de pédalage.

7. Série de roues à transmission à rapport de vitesse périodiquement varié et ayant une poulie auxiliaire à déplacement réciproque (312) permettant de stocker/libérer l'énergie cinétique selon l'une quelconque des revendications 1-6, dans laquelle la structure du dispositif de précontrainte de l'ensemble de poulie auxiliaire pour stocker/libérer l'énergie (700) est la suivante :
1) une extrémité du manche de pression de roue auxiliaire (301) formée comme une structure de bras de support pivotant et rigide est combinée de façon pivotante avec le corps de machine (800), et un ressort de stockage/libération d'énergie sous précontrainte (302) est installé entre les deux éléments ci-dessus, l'autre extrémité de celui-ci est installée avec un arbre de roue auxiliaire (311) pour une installation avec la poulie auxiliaire (312) ; ou
2) une extrémité du manche de pression de roue auxiliaire assurant une fonction de ressort en forme de plaque est combinée avec le corps de machine (800) pour remplacer le manche de pression de roue auxiliaire (301) et le ressort de stockage/libération d'énergie sous précontrainte (302), l'autre extrémité du manche de pression de roue auxiliaire assurant une fonction de ressort en forme de plaque est installée avec l'arbre de roue auxiliaire (311), la poulie auxiliaire (312) est en mesure de recevoir la force de précontrainte appliquée par le manche de pression de roue auxiliaire présentant une fonction de ressort en forme de plaque.

8. Série de roues à transmission à rapport de vitesse périodiquement varié et ayant une poulie auxiliaire à déplacement réciproque (312) permettant de stocker/libérer l'énergie cinétique selon l'une quelconque des revendications 1-7, dans lequel le moyen de constitution de l'ensemble de poulie auxiliaire pour stocker/libérer l'énergie cinétique (700) comprend :
- l'extrémité distale du manche de pression de roue auxiliaire (301) installée de façon pivotante sur le corps de machine (800) est installée avec une première poulie auxiliaire (312), la partie de libération de la courroie de transmission (100) qui se libère de l'ensemble de poulie passive (600) est installée avec le manche de pression de roue auxiliaire (301) capable de pivoter le long du corps de machine (800) pour appliquer une force de précontrainte vers l'intérieur depuis l'extérieur dans l'état normal, du ressort de stockage/libération d'énergie sous précontrainte (302) et de la poulie auxiliaire (312) ; ou
- l'extrémité distale du manche de pression de roue auxiliaire (301) installée de façon pivotante sur le corps de machine (800) est installée avec une première poulie auxiliaire (312), la partie d'engagement de la courroie de transmission (100) étant prête à pénétrer dans l'ensemble de poulie passive (600) est installée avec le manche de pression de roue auxiliaire (301) capable de pivoter le long du corps de machine (800) pour étendre la force de précontrainte vers l'extérieur depuis l'intérieur dans l'état normal, du ressort de stockage/libération d'énergie sous précontrainte (302) et de la poulie auxiliaire (312) ; ou
- l'extrémité distale du manche de pression de roue auxiliaire (301) installée de façon pivotante sur le corps de machine (800) est installée avec une première poulie auxiliaire (312), la partie de libération de la courroie de transmission (100) qui se libère de l'ensemble de poulie passive (600) est installée avec le manche de pression de roue auxiliaire (310) capable de pivoter le long du corps de machine (800) pour étendre la force de précontrainte vers l'extérieur depuis l'intérieur dans l'état normal, du ressort de stockage/libération d'énergie sous précontrainte (302) et de la poulie auxiliaire (312) ; ou
- l'extrémité distale du manche de pression de roue auxiliaire (301) installée de façon pivotante sur le corps de machine (800) est installée avec une première poulie auxiliaire (312), la partie de libération de la courroie de transmission (100) qui se libère de l'ensemble de poulie passive (600) est installée avec le manche de pression de roue auxiliaire (301) capable de pivoter le long du corps de machine (800) pour appliquer une force vers l'intérieur depuis l'extérieur dans l'état normal, du ressort de stockage/libération d'énergie sous précontrainte (302) et la poulie auxiliaire (312) ; ou
- l'extrémité distale du manche de pression de roue auxiliaire (301) installée de façon pivotante sur le corps de machine (800) est installée avec une première poulie auxiliaire (312), la partie de libération de la courroie de transmission (100) qui se libère de l'ensemble de poulie passive (600) est installée avec le manche de pression de roue auxiliaire (301) capable de pivoter le long du corps de machine (800) pour appliquer une force de précontrainte vers l'intérieur depuis l'extérieur dans l'état normal, du ressort de stockage/libération d'énergie sous précontrainte (302) et de la poulie auxiliaire (312), et la partie d'engagement de la courroie de transmission (100) étant prête à pénétrer dans l'ensemble de poulie passive (600) est installée avec le manche de pression de roue auxiliaire (301) capable de pivoter le long du corps de machine (800) pour étendre la force de précontrainte vers l'extérieur depuis l'intérieur dans l'état normal, du ressort de stockage/libération d'énergie sous précontrainte (302) et de la poulie auxiliaire (312) ; ou
- l'extrémité distale du manche de pression de roue auxiliaire (301) installée de façon pivotante sur le corps de machine (800) est installée avec une première poulie auxiliaire (312), la partie de libération de la courroie de transmission (100) qui se libère de l'ensemble de poulie passive (600) est installée avec le manche de pression de roue auxiliaire (301) capable de pivoter le long du corps de machine (800) pour étendre la force de précontrainte vers l'extérieur depuis l'intérieur dans l'état normal, du ressort de stockage/libération d'énergie sous précontrainte (302) et de la poulie auxiliaire (312), et la partie d'engagement de la courroie de transmission (100) étant prête à pénétrer dans l'ensemble de poulie passive (600) est installée avec le manche de pression de roue auxiliaire (301) capable de pivoter le long du corps de machine (800) pour appliquer une force de précontrainte vers l'intérieur depuis l'extérieur dans l'état normal, du ressort de stockage/libération d'énergie sous précontrainte (302) et de la poulie auxiliaire (312) ; ou
- l'extrémité distale du manche de pression de roue auxiliaire (301) installée de façon pivotante sur le corps de machine (800) est installée avec une première poulie auxiliaire (312), la partie de libération de la courroie de transmission (100) qui se libère de l'ensemble de poulie passive (600) est installée avec le manche de pression de roue auxiliaire (301) capable de pivoter le long du corps de machine (800) pour étendre la force de précontrainte vers l'extérieur depuis l'intérieur dans l'état normal, du ressort de stockage/libération d'énergie sous précontrainte (302) et de la poulie auxiliaire (312), et la partie d'engagement de la courroie de transmission (100) étant prête à pénétrer dans l'ensemble de poulie passive (600) est installée avec le manche de pression de roue auxiliaire (301) capable de pivoter le long du corps de machine (800) pour étendre la force de précontrainte vers l'extérieur depuis l'intérieur dans l'état normal, du ressort de stockage/libération d'énergie sous précontrainte (302) et de la poulie auxiliaire (312) ; ou
- l'extrémité distale du manche de pression de roue auxiliaire (301) installée de façon pivotante sur le corps de machine (800) est installée avec une première poulie auxiliaire (312), engagée au niveau de la partie de libération de la courroie de transmission (100) qui se libère de l'ensemble de poulie passive (600), avec la fonction du ressort de précontrainte pour stocker/libérer l'énergie (302), ledit manche de pression de roue auxiliaire (301) étant précontraint et agrandi de l'intérieur vers l'extérieur, et l'extrémité distale du manche de pression de roue auxiliaire (301) installé de façon pivotante sur le corps de machine (800) est installé avec une deuxième poulie auxiliaire (312), engagé au niveau de la partie d'engagement de la courroie de transmission (100) étant prête à être engagée avec l'ensemble de poulie passive (600), avec la fonction du ressort sous précontrainte pour stocker/libérer l'énergie (302), ledit manche de pression de roue auxiliaire (301) étant précontraint et étiré depuis l'intérieur vers l'extérieur, et un ressort bidirectionnel de stockage/libération d'énergie sous précontrainte s'étirant depuis l'intérieur vers l'extérieur (4021) est également installé entre les deux poulies auxiliaires (312) et le manche de pression de roue auxiliaire (301) ; ou
- l'extrémité distale du manche de pression de roue auxiliaire (301) installée de façon pivotante sur le corps de machine (800) est installée avec une première poulie auxiliaire (312), la partie de libération de la courroie de transmission (100) qui se libère de l'ensemble de poulie passive (600) est installée avec le manche de pression de roue auxiliaire (301) capable de pivoter le long du corps de machine (800) pour appliquer une force de précontrainte vers l'intérieur depuis l'extérieur dans l'état normal, du ressort de stockage/libération d'énergie sous précontrainte (302) et de la poulie auxiliaire (312), et la partie d'engagement de la courroie de transmission (100) étant prête à pénétrer dans l'ensemble de poulie passive (600) est installée avec le manche de pression de roue auxiliaire (301) capable de pivoter le long du corps de machine (800) pour appliquer une force de précontrainte vers l'intérieur depuis l'extérieur dans l'état normal, du ressort de stockage/libération d'énergie sous précontrainte (302) et de la poulie auxiliaire (312) ; ou
- l'extrémité distale du manche de pression de roue auxiliaire (301) installée de façon pivotante sur le corps de machine (800) est installée avec une première poulie auxiliaire (312), engagée au niveau de la partie de libération de la courroie de transmission (100) qui se libère de l'ensemble de poulie passive (600), avec la fonction du ressort de stockage/libération d'énergie sous précontrainte (302), ledit manche de pression de roue auxiliaire (301) étant précontraint et pressé depuis l'extérieur vers l'intérieur, et l'extrémité distale de l'autre manche de pression de roue auxiliaire (301) installée de façon pivotante sur le corps de machine (800) est installée avec une deuxième poulie auxiliaire (312), engagée au niveau de la partie d'engagement de la courroie de transmission (100) étant prête à pénétrer dans l'ensemble de poulie passive (600), avec la fonction du ressort de stockage/libération d'énergie sous précontrainte (302), ledit manche de pression de roue auxiliaire (301) est précontraint et pressé depuis l'extérieur vers l'intérieur, et un ressort bidirectionnel de stockage/libération d'énergie sous précontrainte se rétractant depuis l'extérieur vers l'intérieur (4022) est également installé entre les deux poulies auxiliaires (312) et le manche de pression de roue auxiliaire (301) ; ou
- les deux poulies auxiliaires (312) sont respectivement installées à une extrémité des manches de pression de roue auxiliaire (301) correspondants, l'autre extrémité des manches de pression de roue auxiliaire (301) étant combinée de façon pivotante avec le corps de machine (800) par le biais de l'arbre de pivotement du manche de pression de roue auxiliaire (303), des ressorts de stockage/libération d'énergie sous précontrainte (302) sont respectivement installés entre les deux manches de pression de roue auxiliaire (301) et le corps de machine (800), les deux poulies auxiliaires (312) étant engagées au niveau du côté extérieur de la partie de libération de la courroie de transmission (100) qui se libère de l'ensemble de poulie passive (600), les deux poulies auxiliaires (312) pressant respectivement la courroie de transmission (100) vers l'intérieur, formant ainsi un angle de flexion concave, et avec la fonction des ressorts de stockage/libération d'énergie sous précontrainte (302), lesdits manches de pression de roue auxiliaire (301) sont précontraints et pressés depuis l'extérieur vers l'intérieur ; ou
- les deux poulies auxiliaires (312) sont respectivement installées à une extrémité des manches de pression de roue auxiliaire (301) correspondants, l'autre extrémité des manches de pression de roue auxiliaire (301) étant combinée de façon pivotante avec le corps de machine (800) par le biais de l'arbre de pivotement du manche de pression de roue auxiliaire (303), des ressorts de stockage/libération d'énergie sous précontrainte (302) sont respectivement installés entre les deux manches de pression de roue auxiliaire (301) et le corps de machine (800), les deux poulies auxiliaires (312) étant engagées au niveau du côté intérieur de la partie de libération de la courroie de transmission (100) qui se libère de l'ensemble de poulie passive (600), les deux poulies auxiliaires (312) s'étendant respectivement vers l'extérieur pour presser la courroie de transmission (100), formant ainsi un angle de flexion convexe, et avec la fonction des ressorts de stockage/libération d'énergie sous précontrainte (302), lesdits manches de pression de roue auxiliaire (301) sont précontraints et étirés depuis l'intérieur vers l'extérieur ; ou
- l'extrémité distale du manche de pression de roue auxiliaire (301) installée de façon pivotante sur l'arbre de roue passive (211) est installée avec une première poulie auxiliaire (312), engagée au niveau de la partie de libération de la courroie de transmission (100) qui se libère de l'ensemble de poulie passive (600), avec la fonction du ressort de stockage/libération d'énergie sous précontrainte (302), ledit manche de pression de roue auxiliaire (301) est précontraint et pressé depuis l'extérieur vers l'intérieur, la courroie de transmission (100) engagée étant ainsi formée avec un angle de flexion concave ; et l'extrémité distale de l'autre manche de pression de roue auxiliaire (301) installée de façon pivotante sur l'arbre de roue passive (211) est installée avec une deuxième poulie auxiliaire (312), engagée au niveau de la partie d'engagement de la courroie de transmission (100) étant prête à être engagée avec l'ensemble de poulie passive (600), avec la fonction du ressort de stockage/libération d'énergie sous précontrainte (302), ledit manche de pression de roue auxiliaire (301) étant précontraint et pressé depuis l'extérieur vers l'intérieur, la courroie de transmission (100) engagée étant ainsi formée avec un angle de flexion concave, et un ressort bidirectionnel de stockage/libération d'énergie sous précontrainte se rétractant depuis l'extérieur vers l'intérieur (4022) est également installé entre les deux poulies auxiliaires (312) et le manche de pression de roue auxiliaire (301).
